# EUROPEAN PATENT SPECIFICATION

(11) **EP 3 721 674 B1**
(45) Date of publication and mention of the grant of the patent: **13.07.2022**
(21) Application number: 17825609.5
(22) Date of filing: 04.12.2017
(51) Int. Cl.: H04W 76/16, H04W 4/24, H04M 15/00, H04L 12/14, H04L 65/1016, H04L 65/1073, H04W 36/14

(54) **METHOD, COMPUTER PROGRAM, CARRIER CONTAINING THE COMPUTER PROGRAM AND WIRELESS DEVICE FOR SUPPORTING MULTIPLE ACCESS NETWORKS**
VERFAHREN, COMPUTERPROGRAMM, DATENTRÄGER MIT DEM COMPUTERPROGRAMM UND DRAHTLOSE VORRICHTUNG ZUR UNTERSTÜTZUNG MEHRERER ZUGANGSNETZWERKE
PROCÉDÉ, PROGRAMME INFORMATIQUE, SUPPORT CONTENANT LE PROGRAMME INFORMATIQUE ET DISPOSITIF SANS FIL POUR PRENDRE EN CHARGE DES RÉSEAUX À ACCÈS MULTIPLE

(43) Date of publication of application: 14.10.2020
(73) Proprietor: Telefonaktiebolaget LM Ericsson (publ), 164 83 Stockholm (SE)
(72) Inventor: FOTI, George, Dollard des Ormeaux Québec H9G 2Z8 (CA); ROMMER, Stefan, 426 74 Västra Frölunda (SE); MADOUR, Lila, Kirkland Québec H9J 3Z8 (CA)
(74) Representative: Zacco Sweden AB
(86) International application number: PCT/IB2017/057620
(87) International publication number: WO 2019/111034

(56) References cited:
- EP-A1- 2 290 883
- EP-A1- 2 658 202
- US-A1- 2012 147 839
- US-A1- 2015 036 587
- US-B1- 9 426 642
- "3rd Generation Partnership Project; Technical Specification Group Services and System Aspects; Policy and charging control architecture (Release 15)", 3GPP STANDARD ; TECHNICAL SPECIFICATION ; 3GPP TS 23.203, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V15.0.0, 18 September 2017 (2017-09-18), pages 1-257, XP051336960, [retrieved on 2017-09-18]
- NTT DOCOMO: "Capturing no-Nx interworking between EPC and 5GC", 3GPP DRAFT; S2-174570_23401_NO-NX_IWK V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Cabo, Mexico; 20170626 - 20170630 25 June 2017 (2017-06-25), XP051303415, Retrieved from the Internet: URL:http://www.3gpp.org/ftp/Meetings_3GPP_ SYNC/SA2/Docs/ [retrieved on 2017-06-25]

## Description

### Technical Field

This disclosure relates generally to session continuity and more particularly to session continuity across different access technologies.

### Background

### Next or fifth Generation Core Network, NGCN or 5GCN:

3GPP has finalized a Study on a new core network architecture for Next Generation System (3GPP Technical Report, TR 23.799). Currently 3GPP is finalizing the corresponding normative specifications in 3GPP Technical specification, TS 23.501, 3GPP TS 23.502 and 3GPP TS 23.503. The new core network architecture, also referred to as Next Generation Core network, NGCN or Fifth Generation Core Network, 5GCN, can be based on an evolution of the current Evolved Packet Core network, EPC, or based on a "clean slate" approach. The 5GCN is defined over the Network Function Virtualization (NFV) and Software Defined Networking (SDN). 5GCN will be used henceforth to refer to the new core network architecture. 5GCN must support various access networks including but not limited to:
- The new radio access network, New RAN (also known as G-UTRAN or NextGen RAN or 5G/NG RAN), that supports the Evolved Long Term Evolution, eLTE eNBs (also referred to as Ng eNB) and/or
- the new radio access network technology, NR (also known as G-UTRA) base stations, BS, also referred to as 5G NodeB, 5G NB, or gNB, and/or,
- other non-3GPP access network such as Wireless Local Area Network, WLAN.

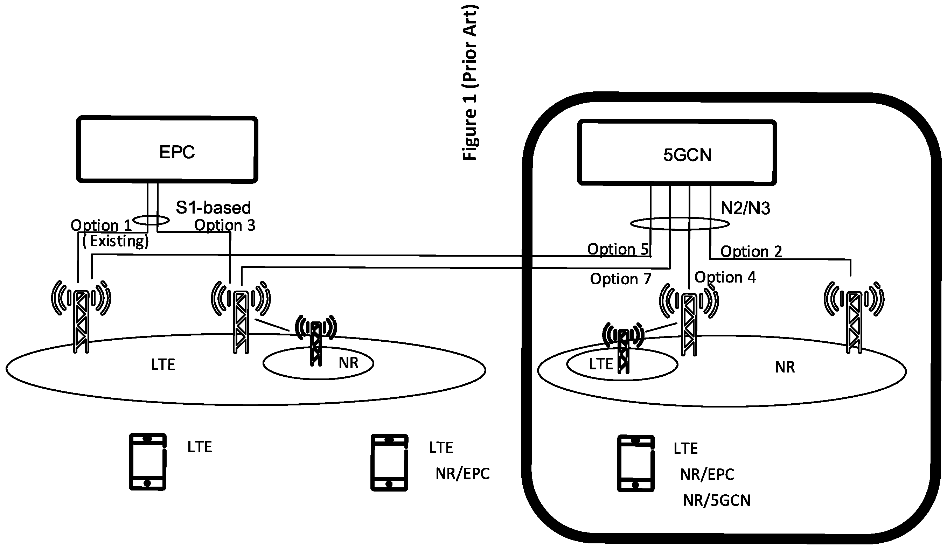

It is foreseen that most wireless devices that support 5G access will also support 4G, i.e., Long Term Evolution or other radio access technologies. This is a likely scenario during a transition period to a full 5G deployment or it may be highly likely on a more long term basis as perhaps not all operators will migrate their network to 5G. Currently, wireless devices supporting 4G are connected to an Evolved Packet Core network, EPC, via an LTE eNB, where EPC is specified in 3GPP TS 23.401. Figure 1 (prior art) illustrates different connectivity scenarios considered by 3GPP for connecting a Wireless Device, WD, supporting 5G and 4G to a core network (EPC or 5GCN) over LTE or 5G NR. Figure 1 (prior art) illustrates multiple architecture options available depending on different combinations of Core Network (EPC, 5GCN) x Standalone radio, SA, (LTE, 5G) x non standalone radio, NSA, (LTE Anchor, 5G Anchor). NSA deployment options are shown as options 3 and 4 and SA deployment options as represented as options 2, 5 and 7. The 4G/5G WD is a WD that supports at least 4G and 5G radio access technologies, and may access:
- an EPC, via 4G LTE eNB (SA) such as option 1 or 5G gNB (NSA) such as option 3 illustrated in Figure 1 (prior art), or
- a 5GCN, via LTE Ng eNB (SA, option 5, NSA using 5G gNB as anchor, option 4) or via 5G gNB (SA, option 2, NSA, option 7).

Currently Internet Protocol Multimedia Subsystem, IMS, is used to provide services such as voice or video over Long Term Evolution, VoLTE and ViLTE over EPC and LTE. The VoLTE profile is described in Group Special Mobile Association GSMA PRD IR.92, V.10.0. Note that there are also requirements to support IMS and VoLTE/ViLTE like services over 5G. A communication system may comprise EPC, 5GCN or EPC and 5GCN. IMS can be accessed via EPC or 5GCN in a communication system.

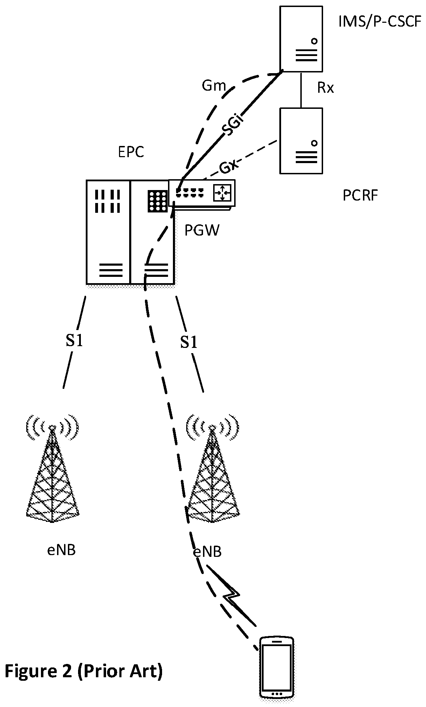

Figure 2 (prior art) illustrates a communication system comprising an EPC and where IMS is deployed in a packet data network to provide VoLTE/ViLTE for a wireless device. The Proxy Call Session Control Function, P-CSCF in IMS interfaces with
- the EPC over an Rx interface to a policy server, referred to by 3GPP as a server hosting a policy and Charging Rules function, PCRF, and
- the EPC over the SGi interface to a packet data gateway, PGW, for sending and receiving IMS signaling to and from the wireless device.

VoLTE/ViLTE is one of the services that requires an:
- Evolved Packet System Non-Guaranteed bit rate, EPS NGBR, for transporting all of the IMS signaling over Gm between the wireless device and P-CSCF. The EPS NGBR must first be established as a default bearer of a packet data network, PDN, connection to the IMS well-known Access Point Name, APN. The wireless device is also assigned an IP address for the PDN connection when establishing the EPS NGBR. An IP version 4, IPV4, and/or an IPV6 address is assigned to the wireless device for the PDN connection to the IMS well-known APN. In addition, the wireless device must use the IMS Proxy Call Session Control Function, P-CSCF, addresses received during the PDN connection establishment to the IMS well-known APN for registering to and accessing the IMS services. The wireless device registers to IMS using the assigned IPv4 or IPv6 address and must use this IP address for all IMS signaling for as long as the IMS registration is valid.
- Evolved Packet System Guaranteed bit Rate, EPS GBR, dedicated bearer established through interaction with the PCRF between the wireless device and the PGW in the EPC. The PGW in the EPC must initiate the creation of the dedicated bearer to transport the voice media within the established PDN connection to the well-known IMS APN following dynamic provisioning of the policy rules from the PCRF triggered by VoLTE or ViLTE session establishment.

After the wireless device is IMS registered or has established a VoLTE/ViLTE session, the P-CSCF may subscribe with the PCRF over the Rx interface to events affecting the IMS registration and/or session of the wireless device. Example of events are described in 3GPP TS 29.214 and comprise:
- IP-CAN Session Termination: When the PDN connection of the IMS well-known APN is terminated, the PCRF shall inform the P-CSCF about the PDN connection termination.
- Service Data Flow Deactivation: used if one or more of the PCC/QoS Rules (i.e. Service Data Flows, SDFs) associated to an EPS GBR or EPS NGBR are deactivated at the PGW in EPC at a certain time, either permanently or temporarily. When the PCRF gets the knowledge that one or more SDFs have been deactivated, (e.g. due to a bearer release or loss of bearer or out of credit condition), the PCRF shall inform the P-CSCF.
- Notification of Signalling Path Status: In the event that the PCRF is notified of the loss or release of the default bearer associated to the PCC/QoS Rules corresponding with the IMS Signalling IP Flows, the PCRF shall inform the P-CSCF about the Loss of the Signalling Transmission path, i.e, default bearer. The information comprises a Specific-Action AVP set to the value "INDICATION_OF_LOSS_OF_BEARER" or "INDICATION_OF_RELEASE_OF_BEARER" and the deactivated IP Flows are included.
- IP-CAN type change Notification: If the P-CSCF has successfully subscribed to change notifications in the wireless device's IP-CAN type (i.e., type of core network providing the PDN connectivity, e.g., EPC, GPRS, 3GPP2) and Radio Access Technology, RAT, type (e.g., EUTRAN, WLAN, UTRAN).
- Reporting Access Network Information: If the AF requests the PCRF to report the access network information (i.e. user location and/or user timezone information), the P-CSCF shall subscribe to the "ACCESS_NETWORK_INFO_REPORT" within the Specific-Action AVP and shall include the required access network information within the Required-Access-Info AVP.
- Public Land Mobile network, PLMN, information change Notification: If the P-CSCF has successfully subscribed to PLMN_CHANGE notification, the PCRF shall notify the P-CSCF when the corresponding event occurs, i.e. when the PLMN where the wireless device is located has been updated or becomes available.

If the PDN connectivity between a wireless device and the network is lost or released, the P-CSCF receives a notification of the event and all ongoing IMS sessions related to this wireless device are released. If the wireless device discovers that PDN connectivity of the IMS well-known APN had been lost, then the wireless device must attempt to re-establish the PDN connection. This will trigger the network to initiate a new NGBR bearer for SIP signalling in conjunction with the PDN connection establishment. When the wireless device regains PDN and IP connectivity, if the IP address has changed or the IMS registration expired during the period of absence of IP connectivity then the wireless device must perform a new registration to IMS as also specified in GSMA PRD IR.92, V.10.0 for VoLTE. If the P-CSCF receives an event notification indicating a RAT type change or IP-CAN type change which is an event sent at handover, the IP address is maintained and the IMS session continues. The handover indication is signaled from the wireless device or the access network.

Document EP 2 658 202 A1 discloses an IMS registration and session initiation for a user equipment (UE). The UE has a subscription identifier comprising an IMSI and/or MSISDN. A PDN-GW establishes an IP-CAN session with a PCRF, for the UE, by transmitting, to the PCRF, the subscription identifier of the UE and an IP address assigned to the UE. The PCRF binds the subscription identifier to the IP address assigned to the UE for the IP-CAN session. Then, upon the UE initiating the IMS registration, a P-CSCF transfers, to an S-CSCF, an IMPU. The S-CSCF obtains, based on the IMPU, the subscription identifier of the UE from a user database. The S-CSCF transfers to the P-CSCF the obtained subscription identifier of the UE. The P-CSCF binds the subscription identifier of the UE to the IMPU. Then, upon the UE initiating an IMS session associated with the IMPU, the P-CSCF establishes an AF session towards the PCRF with the subscription identifier bound to the IMPU. The PCRF then identifies the correct IP-CAN session by matching the subscription identifier with the one of the IP-CAN session.

Document US 9 426 642 B1 discloses a mobile device that establishes and registers a connection to a first network at a registration server, and subsequently establishes and registers a connection to a second network at the registration server.

### Summary

The invention is defined by the appended independent claims 1 and 7-9. The present disclosure describes exemplary methods and apparatus for supporting IMS session continuity for a wireless device supporting single radio for 4G and 5G and simultaneous access and connectivity to a DN over 4G and 5G networks. The 4G and 5G networks may share the user plane and/or share a policy framework or may be completely independent of each other. The methods furthermore address the issue of a single access wireless device that does not trigger a new IMS registration when changing access from for example 4G and 5G and a new IP address is acquired over the newly accessed core network. Furthermore, the methods further describe steps at the wireless device, policy entity and/or even P-CSCF to support simultaneous connectivity to IMS over 4G and 5G and maintaining a single IMS signaling path either over 4G or 5G. Methods further enable a single IP address to be shared across the 4G and 5G connections to the same DN, i.e., IMS, or even allowing different IP addresses over the different core networks, but still maintaining a single IMS signaling path. Various examples are therefore provided depending on the 4G and 5G core network (EPC, 5GCN) configuration, i.e., common user plane and/or common policy framework, or simply two independent Core networks.

### Brief Description of the Drawings

The accompanying drawing figures incorporated in and forming a part of this specification illustrate several aspects of the disclosure, and together with the description serves to explain the principles of the disclosure.
Figure 1 (prior art) illustrates deployment scenarios of 5G NR and LTE with 5GCN and EPC.
Figure 2 (prior art) illustrates an Evolved Packet System connected to IMS and control of the IMS service requirements via a Policy control system.
Figure 3 illustrates a 4G and 5G system with a common policy control system but separate user planes, according to one example not covered by the claims.
Figure 3a illustrates a flow diagram of a UE establishing packet data sessions and connecting to IMS over multiple access networks, according to some examples not covered by the claims. .
Figure 4 illustrates a 4G and 5G system with a common policy control system and user planes, according to one example not covered by the claims.
Figure 5 illustrates a 4G and 5G system with a separate policy control system and separate user planes, according to one example not covered by the claims.
Figure 6 illustrates a method in a policy control entity, according to one example not covered by the claims.
Figure 7 illustrates a method in a policy control entity, according to another example not covered by the claims.
Figure 8 illustrates a method in a Session management function in a communication system where the 4G and 5G user planes are common, according to one example not covered by the claims.
Figure 9 illustrates an exemplary method at a wireless device or UE, according to one embodiment.
Figure 10 illustrates a circuitry of a network entity according to one example not covered by the claims.
Figure 11 illustrates a network entity according to another example not covered by the claims.
Figure 12 illustrates a circuitry of a wireless device or UE according to one example not covered by the claims.
Figure 13 illustrates a wireless device or UE according to another example not covered by the claims.
Figure 14 illustrates a virtualization environment in which functions according to some embodiment(s), not covered by the claims, may be implemented.

### Detailed Description

### Acronyms and definitions:

The following acronyms and definitions are used throughout this disclosure.

| | |
|---|---|
| • 3GPP | Third Generation Partnership Project |
| • 4G | Fourth Generation |
| • 5G | Fifth Generation |
| • 5GCN | Next Generation Core network |
| • AF | Application Function |
| • AMF | Access and Mobility Function |
| • APN | Access Point Plane |
| • A VP | Attribute Value Pair |
| • CPU | Central Processing Unit |
| • CN | Core Network |
| • CP | Control plane |
| • D2D | Device to Device |
| • DNN | Data Network Name |
| • DN | Data Network |
| • eNB | Evolved NodeB |
| • EUTRAN | Evolved Universal Terrestrial Radio Access Network |
| • FPGA | Field Programmable Gate Array |
| • GBR | Guaranteed Bit Rate |
| • gNB | next generation NodeB |
| • G-UTRAN | Next Generation-UTRAN |
| • IP-CAN | IP Connectivity Access Network |
| • IoT | Internet of Things |
| • IMS | IP Multimedia Subsystem |
| • IMSI | International Mobile Subscriber Identifier |
| • IP | Internet Protocol |
| • LTE | Long Term Evolution |
| • NG | Next Generation |
| • NGBR | Non-Guaranteed Bit Rate |
| • NR | New Radio |
| • PCF | Policy Control Function |
| • PCSCF | Proxy Call Session Control Function |
| • PCRF | Policy and Charging Rule Function |
| • PDN | Packet Data Connection |
| • PDU | Packet Data Unit |
| • PGW-C | Packet Data Gateway Control plane |
| • PGW-U | Packet Data Gateway User Plane |
| • QCI | QoS Class identifier |
| • QFI | QoS Flow Identifier |
| • QoS | Quality of Service |
| • RAN | Radio Access Network |
| • RAT | Radio Access Technology |
| • SMF | Session Management Function |
| • SUPI | Subscriber Permanent Identifier |
| • UE | User Equipment |
| • UP | User Plane |
| • UPF | User Plane Function |
| • USB | Universal Serial Bus |
| • UTRAN | Universal Terrestrial Radio Access Network |
| • ViLTE | Video over LTE |
| • VoLTE | Voice over LTE |
| • VPN | Virtual Private Network |
| • WD | Wireless Device |
| • WiFi | Wireless Fidelity |

**PDU session:** Used in 5G. Represents an association between the wireless device and a Data Network, DN, and that provides a PDU connectivity service, i.e., a service that provides exchange of PDUs between the wireless device and a DN.

**PDN Connection:** Used in 4G. Represents an association between a wireless device represented by one IPv4 address and/or one IPv6 prefix and a packet data network, PDN, or DN represented by an APN.

**APN:** the APN identifies a Packet Data gateway, PGW, and includes an APN network identifier which defines the Packet Data Network, PDN. Or Data Network, DN to which the wireless device requests connectivity, and may also include an APN operator identifier which defines in which Public Land Mobile Network, PLMN, the PGW is located.

**DNN:** Data Network name have the same meaning as APN.

**EPS bearer:** is the level of granularity for bearer level QoS control in the EPC/EUTRAN. That is, all traffic mapped to the same EPS bearer receive the same bearer level packet forwarding treatment (e.g. scheduling policy, queue management policy, rate shaping policy, RLC configuration, etc.). Providing different bearer level packet forwarding treatment requires separate EPS bearers. One EPS bearer is established when the wireless device connects to a PDN, and that remains established throughout the lifetime of the PDN connection to provide the wireless device with always-on IP connectivity to that PDN. That bearer is referred to as the default bearer. Any additional EPS bearer that is established for the same PDN connection is referred to as a dedicated bearer.

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

In the following description, numerous specific details are set forth. However, it is understood that embodiments may be practiced without these specific details. In other instances, well-known circuits, structures, and techniques have not been shown in detail in order not to obscure the understanding of the description. Those of ordinary skill in the art, with the included description, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

As used herein, the singular forms "a", "an" and "the" are intended to include the plural forms as well, unless the context clearly indicates otherwise. It will be further understood that the terms "comprises," "comprising," "includes," and/or "including" when used herein, specify the presence of stated features, integers, steps, operations, elements, and/or components, but do not preclude the presence or addition of one or more other features, integers, steps, operations, elements, components, and/or groups thereof.

In the present disclosure, a wireless device is a non-limiting term and refers to a device capable, configured, arranged and/or operable to communicate wirelessly with network nodes and/or another wireless device. Communicating wirelessly may involve transmitting and/or receiving wireless signals using electromagnetic signals, radio waves, infrared signals, and/or other types of signals suitable for conveying information through air. In particular embodiments, wireless devices may be configured to transmit and/or receive information without direct human interaction. For instance, a wireless device may be designed to transmit information to a network on a predetermined schedule, when triggered by an internal or external event, or in response to requests from the network. Generally, a wireless device may represent any device capable of, configured for, arranged for, and/or operable for wireless communication, for example radio communication devices. Examples of wireless devices include, but are not limited to, user equipment (UE) such as smart phones. Further examples include wireless cameras, wireless-enabled tablet computers, laptop-embedded equipment (LEE), laptop-mounted equipment (LME), USB dongles, and/or wireless customer-premises equipment (CPE).

As one specific example, a wireless device may represent a UE configured for communication in accordance with one or more communication standards promulgated by the 3^{rd} Generation Partnership Project (3GPP), such as 3GPP's LTE, and/or 5G standards. As used herein, a "user equipment" or "UE" may not necessarily have a "user" in the sense of a human user who owns and/or operates the relevant device. Instead, a UE may represent a device that is intended for sale to, or operation by, a human user but that may not initially be associated with a specific human user.

The wireless device may support device-to-device (D2D) communication, for example by implementing a 3GPP standard for sidelink communication, and may in this case be referred to as a D2D communication device.

As yet another specific example, in an Internet of Things (IOT) scenario, a wireless device may represent a machine or other device that performs monitoring and/or measurements, and transmits the results of such monitoring and/or measurements to another wireless device and/or a network node. The wireless device may in this case be a machine-to-machine (M2M) device, which may in a 3GPP context be referred to as a machine-type communication (MTC) device. As one particular example, the wireless device may be a UE implementing the 3GPP narrow band internet of things (NB-IoT) standard. Particular examples of such machines or devices are sensors, metering devices such as power meters, industrial machinery, or home or personal appliances, e.g. refrigerators, televisions, personal wearables such as watches etc. In other scenarios. A wireless device such as a UE may be used as router or a relay for these internet of things devices that connect to the network via the UE. A wireless device may also represent a vehicle or other equipment that is capable of monitoring and/or reporting on its operational status or other functions associated with its operation.

A wireless device as described above may represent the endpoint of a wireless connection, in which case the device may be referred to as a wireless terminal. Furthermore, a wireless device as described above may be mobile, in which case it may also be referred to as a mobile device or a mobile terminal. The term User Equipment, UE, is used henceforth to describe the embodiments, however wireless device and user equipment may sometimes be used interchangeably.

As used herein, "network node" refers to equipment capable, configured, arranged and/or operable to communicate directly or indirectly with a wireless device and/or with other equipment in the wireless communication network, such as 5GCN and EPC that enable and/or provide to the wireless device access to one or more data networks. Examples of network nodes used in the embodiments herein include, but are not limited to 5GCN entities implementing session management function, SMF, policy control function, PCF, and user plane function, UPF and EPC entities such packet data gateway, PGW, and entity implementing policy and charging control function, PCRF. In addition, a "network node" may be an entity in the data network, DN, implementing an application function, AF. If the DN is an IMS, the AF is a P-CSCF.

More generally, network nodes may represent any suitable device (or group of devices) capable, configured, arranged, and/or operable to enable and/or provide a wireless device access to the data network over the wireless communication network (e.g., 5GCN or EPC) or to provide some service to a wireless device that has accessed the wireless communication network.

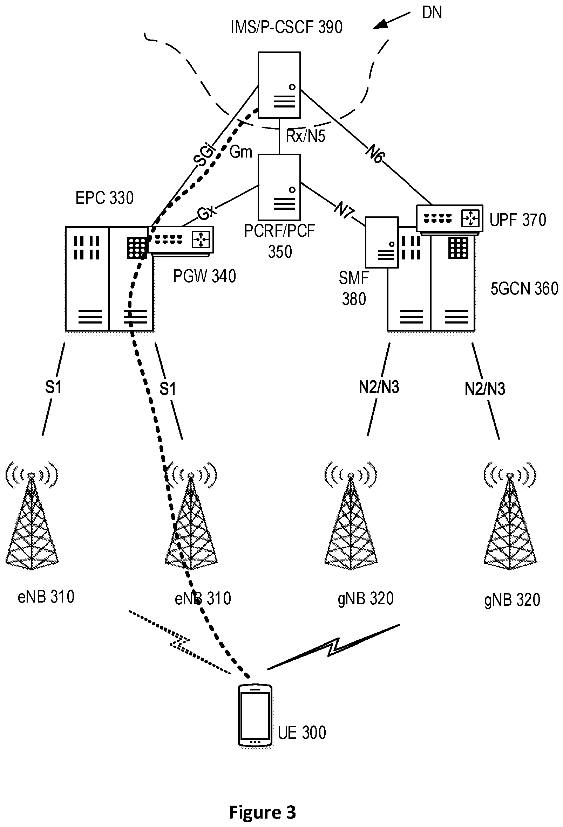

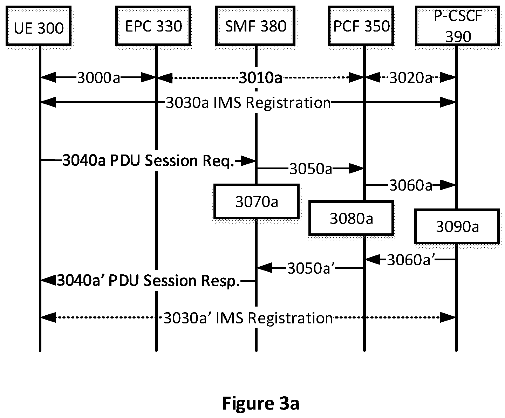

Figure 3 illustrates a telecommunication system comprising an EPC 330 and a 5GCN 360, each having its own user plane anchor functions. Notably, a 5GCN user plane anchor comprises a UPF 370 with an SMF 380 used as the controlling entity of the UPF 370 and EPC user plane anchor is illustrated as the PGW 340. The EPC 330 and 5GCN 360 share a common policy entity 350 acting as a PCRF towards the PGW 340 and as a PCF towards the SMF 380 controlling the UPF 370. Both EPC 330 and 5GCN 360 can access the IMS in the data network, DN. The P-CSCF 390 in the IMS interfaces to the policy entity 350 over an Rx/N5 interface and communicates with the UE 300 over the IMS Gm interface. Figure 3 illustrates two scenarios and is described in conjunction with the corresponding flow diagram in Figure 3a:

### Scenario 1: UE 300 supports one single access 4G or 5G at a time (single radio):

In this scenario, the UE 300 is first connected to the first core network. Let's assume the UE is first connected to an EPC 330 over an LTE eNB 310. The UE 300 established a PDN connection with the PGW 340 to a well-known IMS APN. A default NGBR bearer is established between the UE 300, the PGW 340 and the eNB 310. The UE 300 is assigned an IPv4 and/or IPv6 IP address and receives a P-CSCF address or identifier as part of the PDN connection establishment. The address or identifier of the P-CSCF 390 is received at the UE 300 in a Protocol Configuration Options, PCO, information element as specified in 3GPP TS 29.274 and 3GPP TS 24.301. The PDN connection is also illustrated in step 3000a of Figure 3a. The EPC 330 interacts with the policy entity 350 to receive policy data. This corresponds to step 3010a of Figure 3a. The UE 300 then performs an IMS registration with the P-CSCF 390 using the assigned IPv4 or IPv6 address over the NGBR bearer as illustrated in step 3030a of Figure 3a. The IMS registration comprises information including the IMS public identity of the user of the wireless device. At IMS registration, the P-CSCF 390 establishes a new Diameter Rx session, step 3020a of Figure 3a with the intention to subscribe to one or more of the following events: the status of the IMS Signaling path, i.e., the status of the NGBR bearer over which the IMS signaling is transported, the IP-CAN change, etc. as this is a single access embodiment, change of IP-CAN only comprises modifying/replacing the IP-CAN.

When the UE 300 enters a 5G area, it may reattach over 5G or perform a handover from 4G to 5G (step not shown in Figure 3a). If the UE 300 registers with 5GCN and wants to maintain IMS continuity, it sends a PDU session request to establish a PDU session with the 5GCN 360, step 3040a of Figure 3a. The PDU session request comprises the UE identity that is compatible with 5G technology and a DNN indicating the PDU session is for IMS. It may also comprise the identity of the P-CSCF 390 with which the UE 300 has previously registered and may include the IMS public identity of the user of the wireless device used in the previous IMS registration. The identity of the P-CSCF 390 and optionally the IMS public identity of the user of the wireless device may be included in a container. The container may be processed by the SMF 380 and/or the policy entity 350. The PDU session request may also include the IP address assigned by the EPC 330. When the SMF380 receives the PDU session request, it handles it as a new PDU session since 5GCN and EPC are separate networks sharing the policy entity 350. The SMF 380 may then perform one or more of the following:
a. If an IP address assigned by EPC is included, the SMF 380 determines if the IP address can be reused. It verifies if the UE 300 is allowed simultaneous access to different networks (4G and 5G) and if the IP address can topologically be reassigned for a UPF 370. As the UE 300 is not allowed or not capable of simultaneous access as the scenario pertains to single radio, the SMF 380 verifies if the IP address can be reused. If the IP address can be reused it reassigns the same IP address, but if the IP address cannot be reused because it cannot topologically be reassigned to a UPF 370 of the 5GCN, then the SMF 380 assigns a new IP address or a new IPv6 prefix for the PDU session.
b. If a container is included in the PDU session request and contains an identity of the P-CSCF 390, the SMF 380 may be able to determine that the P-CSCF 390 in the container is in the list of allowable P-CSCFs of the IMS DN. If the identifier of the P-CSCF 390 is found in the list, then when the SMF 380 sends a PDU session response to the UE 300 at step 3040a', it will only include the identity of the P-CSCF 390 as requested by the UE. a) and b) are illustrated in Figure 3a step 3070a which may occur prior to step 3050a. If the P-CSCF 390 included in the PDU session request does not correspond to any P-CSCF reachable via 5GCN 360, then it provides an ordered list of P-CSCF identifiers. In this scenario, the same P-CSCF 390 is accessible via 5GCN 360.
c. Alternatively, the SMF 380 sends to the PCF 350, step 3050a of Figure 3a, the container or the content of the container, the DNN, the UE identity used in 5G, the type of access used by the UE 300 (i.e., 5G), the type of core network accessed by the UE 300 (i.e., 5GCN) and may include the IP address to be assigned to the PDU session (or an indication if the IP address for the PDU session is new or the same). The policy entity 350 is the same policy entity used by the EPC. The SMF 380 is either configured to use the same policy entity 350 based on the DNN (as the APN and DNN indicate IMS) or the policy entity 350 serving the wireless device 300 is obtained from the subscriber database. The Policy entity 350 (step 3080a of Figure 3a, which may occur any time before or after step 3060a) retrieves the identity of the P-CSCF 390 from the container and determines that there is an existing Rx/Nx session with that P-CSCF 390. The policy entity 350 may also determine based on the received UE identity or the received P-CSCF identifier in the container that the UE identity used in 5G (received identity) maps to the UE identity used in 4G and correspond to the same UE 300 and that an Rx/N5 session with the P-CSCF 390 exists. The policy entity 350 can then notify the P-CSCF 390 (step 3060a of Figure 3a) that the user has moved to 5G and changed in IP-CAN and RAT. If available, the policy entity 350 provides to the P-CSCF 390, the IMS public identity used by the UE 300 in the previous IMS registration and the assigned IP address for the PDU session in 5G. The P-CSCF 390 may use the IMS public identity to determine (step 3090a of Figure 3a) that there is indeed an ongoing IMS registration for the UE300. If the assigned IP address is received, and it is the same IP address used in the previous IMS registration then, the P-CSCF 390 sends a response to the policy entity 350 (step 3060a' of Figure 3a) confirming the UE 100 has an ongoing IMS registration in the P-CSCF 390 and may instruct the policy entity 350 to release the previous PDN connection over the previous IP-CAN or RAT since the same IP address is reused over 5G. The P-CSCF 390 maintains the IMS registration and the UE IMS context. If the assigned IP address is received, and it is not the same IP address used in the previous IMS registration by the UE 100, then the P-CSCF 390 sends a response to the policy entity 350 (step 3060a' of Figure 3a) confirming that the P-CSCF 390 will purge all IMS related data for the UE 300 and may include a purge timer during which the P-CSCF 390 is expecting an IMS registration from the UE 300. The P-CSCF 390 maintains all IMS context for the UE 300 until the timer expires after which all IMS context for the UE 300 will be cleared if a new IMS registration from the UE 300 is not received. The policy entity 350 sends to the SMF 380 (step 3050a' of Figure 3a) information comprising the P-CSCF 390 to be used by the UE 300 and may also include a purge timer associated with the P-CSCF 390. The SMF 380 sends a PDU session response to the UE 300 (step 3040a' of Figure 3a) providing it an assigned IP address or IPv6 prefix (same or new), and may include the identifier of the P-CSCF 390 confirming the identity of the P-CSCF provided by the UE in the PDU session request. Additionally, if a purge timer is provided by the P-CSCF 390, it will be included in the PDU session response.

If the UE 300 received a new IP address and received the identity of a P-CSCF 390 that is the same P-CSCF 390 indicated in the PDU session request illustrated at step 3040a of Figure 3a, or simply the same P-CSCF with which the UE 300 has previously registered when on 4G (step 3030a of Figure 3a) and if a purge timer is included, the UE 300 performs an IMS registration (step 3030a' of Figure 3a) with the P-CSCF 390 prior to the expiration of the purge timer or immediately after receiving the new IP address.

### Scenario 2: UE 300 supports simultaneous 4G and 5G access (simultaneous dual-radio):

In this scenario, the UE 300 is first connected to the first core network. Let's assume the UE is first connected to an EPC 330 over an LTE eNB 310. The UE 300 established a PDN connection with the PGW 340 to a well-known IMS APN. A default NGBR bearer is established between the UE 300, the PGW 340 and the eNB 310. The UE 300 is assigned an IPv4 and/or IPv6 address/prefix and receives a P-CSCF address or identifier as part of the PDN connection establishment. The address or identifier of the P-CSCF 390 is received at the UE 300 in a Protocol Configuration Options, PCO, information element as specified in 3GPP TS 29.274 and 3GPP TS 24.301. The PDN connection is also illustrated in step 3000a of Figure 3a. The EPC 330 interacts with the policy entity 350 to receive policy data. This corresponds to step 3010a of Figure 3a. The UE 300 then performs an IMS registration with the P-CSCF 390 using the assigned IPv4 or IPv6 address over the NGBR bearer as illustrated in step 3030a of Figure 3a. The IMS registration comprises information including the IMS public identity of the user of the wireless device. At IMS registration, the P-CSCF 390 establishes a new Diameter Rx session, step 3020a of Figure 3a with the intention to subscribe to one or more of the following events: the status of the IMS Signaling path, i.e., the status of the NGBR bearer over which the IMS signaling is transported, the IP-CAN change which in accordance with the embodiment comprises also adding an IP-CAN or removing an IP-CAN in addition to changing/modifying/replacing the IP-CAN due to handover as currently known.

When the UE 300 enters a 5G area or determines it needs to setup an IMS session using 5G access, it registers over 5G. If the UE 300 registers with 5GCN and wants to maintain IMS continuity, it sends a PDU session request to establish a PDU session with the 5GCN 360, step 3040a of Figure 3a. The PDU session request comprises the UE identity that is compatible with 5G technology and a DNN indicating the PDU session is for IMS. It also comprises the identity of the P-CSCF 390 with which the UE 300 has previously registered and may include the IMS public identity of the user of the wireless device used in the previous IMS registration. The identity of the P-CSCF 390 and optionally the IMS public identity of the user of the wireless device may be included in a container. The container may be processed by the SMF 380 and/or the policy entity 350. The PDU session request may also include the IP address assigned by the EPC 330. When the SMF380 receives the PDU session request, it handles it as a new PDU session since 5GCN and EPC are separate networks sharing only the policy entity 350. The SMF 380 may then perform one or more of the following:
a. If the PDU session request includes the IP address assigned by EPC 330, the SMF 380 verifies if the UE 300 is allowed simultaneous access to different networks (4G and 5G). If the SMF 380 determines simultaneous access is supported and allowed, the SMF 380 assigns a new IP address or a new IPv6 prefix for the PDU session.
b. If a container is included in the PDU session request and contains an identity of the P-CSCF 390, the SMF 380 may be able to determine that the P-CSCF 390 in the container is in the list of allowable P-CSCFs of the IMS DN. If the identifier of the P-CSCF 390 is found in the list, then when the SMF 380 sends a PDU session response to the UE 300 at step 3040a', it will only include the identity of the P-CSCF 390 as requested by the UE. a) and b) are illustrated in Figure 3a step 3070a which may occur prior to step 3050a. If the P-CSCF 390 included in the PDU session request does not correspond to any P-CSCF reachable via 5GCN 360, then it provides an ordered list of P-CSCF identifiers. In this scenario, the same P-CSCF 390 is accessible via 5GCN 360.
c. Alternatively, the SMF 380 sends to the PCF 350, step 3050a of Figure 3a, the container or the content of the container, the DNN, the UE identity used in 5G, the type of access used by the UE 300 (i.e., 5G), the type of core network accessed by the UE 300 (i.e., 5GCN) and may include the IP address to be assigned to the PDU session (or an indication that a new IP address for the PDU session is to be assigned). The policy entity 350 is the same policy entity used by the EPC 330. The SMF 380 is either configured to use the same policy entity 350 based on the DNN (as the APN and DNN indicate IMS) or the policy entity 350 serving the wireless device 300 is obtained from the subscriber database (not shown). The Policy entity 350 (step 3080a of Figure 3a, which may occur any time before or after step 3060a) retrieves the identity of the P-CSCF 390 from the container and determines that there is an existing Rx/Nx session with that P-CSCF 390. The policy entity 350 may also determine based on the received UE identity or the received P-CSCF identifier in the container that the UE identity used in 5G (received identity) maps to the UE identity used in 4G and correspond to the same UE 300 and that an Rx/N5 session with the P-CSCF 390 exists. The policy entity 350 can then notify the P-CSCF 390 (step 3060a of Figure 3a) that the user has added 5G and is simultaneously connected to 5G IP-CAN and 5G RAT. If available, the policy entity 350 provides to the P-CSCF 390, the IMS public identity used by the UE 300 in the previous IMS registration and the assigned IP address for the PDU session in 5G. The P-CSCF 390 may use the IMS public identity to determine (step 3090a of Figure 3a) that there is indeed an ongoing IMS registration for the UE300. If the P-CSCF determines that the UE 200 must perform an IMS registration over 5G, the P-CSCF 390 may instruct the policy entity 350 to release the previous PDN connection over the previous IP-CAN or RAT. The P-CSCF 390 indicates that it will purge all IMS related data for the UE 300 and may include a purge timer during which the P-CSCF 390 is expecting an IMS registration from the UE 300. The P-CSCF 390 maintains all IMS context for the UE 300 until the purge timer expires after which all IMS context for the UE 300 will be cleared if a new IMS registration from the UE 300 is not received. Alternatively, if the P-CSCF 390 maintains the IMS registration over 4G, it may allow the UE 300 to access IMS service simultaneously over 5G without necessarily performing an IMS registration over 5G, then the P-CSCF 390 informs the policy entity 350 (step 3060a' of Figure 3a) that the UE 300 should use the P-CSCF 390 without performing another IMS registration over 5G. The policy entity 350 sends to the SMF 380 (step 3050a' of Figure 3a) information comprising the P-CSCF 390 to be used by the UE 300 and may also include a purge timer associated with the P-CSCF 390 if the P-CSCF is expecting the UE 300 to perform an IMS registration over 5G. Alternatively, the policy entity 350 sends to the SMF 380 (step 3050a' of Figure 3a) information comprising the P-CSCF 390 to be used by the UE 300 and may also include an indication that the UE 300 is already registered with IMS over 4G. The SMF 380 sends a PDU session response to the UE 300 (step 3040a' of Figure 3a) providing it an assigned IP address or IPv6 prefix, and may include a container comprising the identifier of the P-CSCF 390 confirming the identity of the P-CSCF provided by the UE in the PDU session request, an associated purge timer for the IMS registration if provided by the P-CSCF 390 or an indication that no IMS registration is required also if provided by the P-CSCF 390.

If the UE 300 received a new IP address and received the identity of a P-CSCF 390 that is the same P-CSCF 390 indicated in the PDU session request illustrated at step 3040a of Figure 3a, or simply the same P-CSCF with which the UE 300 has previously registered when on 4G (step 3030a of Figure 3a) and if a purge timer is included, the UE 300 performs an IMS registration (step 3030a' of Figure 3a) with the P-CSCF 390 prior to the expiration of the purge timer or immediately after receiving the new IP address. If an indication that an IMS registration is not required for the P-CSCF 390, the UE 300 determines that its existing IMS registration over 4G should be used. All IMS signaling will be sent over 4G over the default NGBR, and 5G could be used for transporting media corresponding to IMS sessions, such as conversational video or board sharing.

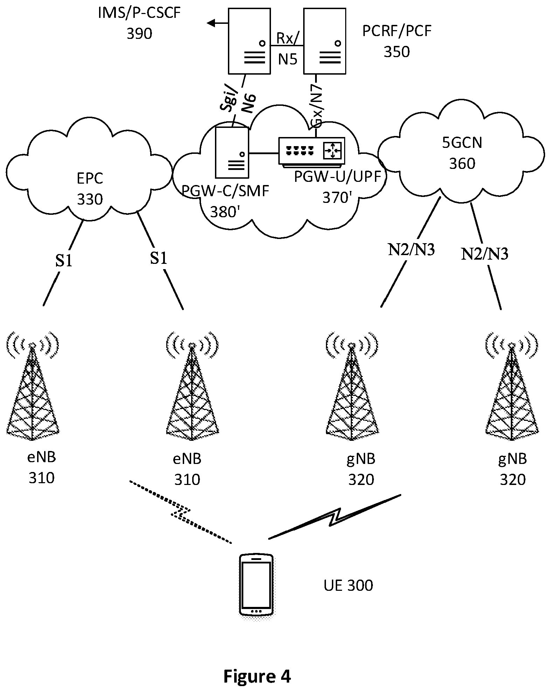

Figure 4 illustrates a telecommunication system comprising an EPC 330 and a 5GCN 360 sharing a user plane PGW-U/UPF controlled by PGW-C/SMF. In addition to sharing the user plane, the EPC 330 and 5GCN 360 share a common policy entity 350. Both EPC 330 and 5GCN 360 can access the IMS in the data network, DN. The P-CSCF 390 in the IMS interfaces to the policy entity 350 over an Rx/N5 interface and communicates with the UE 300 over the IMS Gm interface. Figure 4 is described in conjunction with flow diagram in Figure 3a:

### Scenario 1: UE 300 supports one single access 4G or 5G at a time (single radio):

In this scenario, the UE 300 is first connected to the first core network. Let's assume the UE is first connected to an EPC 330 over an LTE eNB 310. The UE 300 established a PDN connection with the PGW-C/SMF 380' to a well-known IMS APN. A default NGBR bearer is established between the UE 300, the PGW-U/UPF 370' (selected by the PGW-C/SMF 380') and the eNB 310. The UE 300 is assigned an IPv4 and/or IPv6 IP address and receives a P-CSCF address or identifier as part of the PDN connection establishment with the PGW-C/SMF 380'. The address or identifier of the P-CSCF 390 is received at the UE 300 in a Protocol Configuration Options, PCO, information element as specified in 3GPP TS 29.274 and 3GPP TS 24.301. The PDN connection is also illustrated in step 3000a of Figure 3a. The EPC 330 interacts with the policy entity 350 through the PGW-C/SMF 380' to receive policy data. This corresponds to step 3010a of Figure 3a. The UE 300 then performs an IMS registration with the P-CSCF 390 using the assigned IPv4 or IPv6 address over the NGBR bearer as illustrated in step 3030a of Figure 3a. The IMS registration comprises information including the IMS public identity of the user of the wireless device. At IMS registration, the P-CSCF 390 establishes a new Diameter Rx session, step 3020a of Figure 3a with the intention to subscribe to one or more of the following events: the status of the IMS Signaling path, i.e., the status of the NGBR bearer over which the IMS signaling is transported, the IP-CAN change.

When the UE 300 enters a 5G area, it may reattach over 5G or perform a handover from 4G to 5G (step not shown in Figure 3a). If the UE 300 registers with 5GCN and wants to maintain IMS continuity, it sends a PDU session request to establish a PDU session with the 5GCN 360, step 3040a of Figure 3a. The PDU session request is sent to an AMF in 5GCN which forwards it to the PGW-C/SMF 380'. The PDU session request comprises the UE identity that is compatible with 5G technology and a DNN indicating the PDU session is for IMS. It may also comprise the identity of the P-CSCF 390 with which the UE 300 has previously registered and may include the IMS public identity of the user of the wireless device used in the previous IMS registration. The identity of the P-CSCF 390 and optionally the IMS public identity of the user of the wireless device may be included in a container. The container may be processed by the PGW-C/SMF 380' and/or the policy entity 350. The PDU session request may also include the IP address assigned by the EPC 330. When the SMF380' receives the PDU session request, it may then perform one or more of the following:
a. The PGW-C/SMF 380' determines based on the received UE identity in the PDU session request over 5G that the UE identity used in 5G maps to the UE identity used in 4G and corresponds to the same UE 300 and that a PDN connection over 4G exists for the UE 300. The PGW-C/SMF 380' determines from the DNN included in the PDU session request that the PDU session is for the same DN as the previous PDN connection over 4G. In this scenario the DNN in the PDU session request over 5G and the APN of the PDN connection over 4G are for IMS. If an IP address assigned by EPC 330 is included in the PDU session request and the PGW-C/SMF 380' determines that the UE 300 is allowed or capable of single radio (received capability from UE 300 and from network as well as subscription information), the PGW-C/SMF 380' may then Assign the same IP address to the PDU session and release the PDN connection over 4G after the PDU session establishment is completed.
b. If a container is included in the PDU session request and contains an identity of the P-CSCF 390, the PGW-C/SMF 380' may be able to determine that the P-CSCF 390 in the container is in the list of allowable P-CSCFs of the IMS DN. If the identifier of the P-CSCF 390 is found in the list, then when the PGW-C/SMF 380' sends a PDU session response to the UE 300 at step 3040a', it will only include the identity of the P-CSCF 390 as requested by the UE. a) and b) are illustrated in Figure 3a step 3070a which may occur prior to step 3050a. As the telecommunication system comprises a common user plane, the same P-CSCF 390 should be accessed via 4G and via 5G.

Alternatively, the PGW-C/SMF 380' sends to the PCF 350, step 3050a of Figure 3a, the container or the content of the container, the DNN, the UE identity used in 5G, the type of access used by the UE 300 (i.e., 5G), the type of core network accessed by the UE 300 (i.e., 5GCN) and may include the IP address to be assigned to the PDU session (in this case the SMF 380 is able to assign the same IP address). The policy entity 350 is the same policy entity used by the EPC 330 since there is a common user plane PGW-U/UPF 370' and common user plane control PGW-C/SMF 380'. The PGW-C/SMF 380' is either configured to use the same policy entity 350 based on the DNN (as the APN and DNN indicate IMS) or the policy entity 350 serving the UE 300 is obtained from the subscriber database. The Policy entity 350 (step 3080a of Figure 3a, which may occur any time before or after step 3060a) retrieves the identity of the P-CSCF 390 from the container and determines that there is an existing Rx/Nx session with that P-CSCF 390. The policy entity 350 may also determine based on the received UE identity or the received P-CSCF identifier in the container that the UE identity used in 5G received identity) maps to the UE identity used in 4G and correspond to the same UE 300 and that an Rx/N5 session with the P-CSCF 390 exists. The policy entity 350 can then notify the P-CSCF 390 (step 3060a of Figure 3a) that the user has moved to 5G and changed in IP-CAN and RAT. If available, the policy entity 350 provides to the P-CSCF 390, the IMS public identity used by the UE 300 in the previous IMS registration and the assigned IP address for the PDU session in 5G, i.e., reuse of the same IP address. The P-CSCF 390 may use the IMS public identity to determine (step 3090a of Figure 3a) that there is indeed an ongoing IMS registration for the UE300. If the assigned IP address is received, and it is the same IP address used in the previous IMS registration then, the P-CSCF 390 sends a response to the policy entity 350 (step 3060a' of Figure 3a) confirming the UE 100 has an ongoing IMS registration in the P-CSCF 390 and may instruct the policy entity 350 to release the previous PDN connection over the previous IP-CAN or RAT since the same IP address is reused over 5G. The P-CSCF 390 maintains the IMS registration and the UE IMS context.

### Scenario 2: UE 300 supports simultaneous 4G and 5G access (simultaneous dual-radio):

Similar to scenario 1 above, however when the SMF380 receives the PDU session request, it may then perform one or more of the following for UE 300 and network supporting simultaneous access over 4G and 5G:
a. The PGW-C/SMF 380' determines based on the received UE identity in the PDU session request over 5G that the UE identity used in 5G maps to the UE identity used in 4G and corresponds to the same UE 300 and that a PDN connection over 4G exists for the UE 300. The PGW-C/SMF 380' determines from the DNN included in the PDU session request that the PDU session is for the same DN as the previous PDN connection over 4G. In this scenario the DNN in the PDU session request over 5G and the APN of the PDN connection over 4G are for IMS, (other DNs can also be used). The PGW-C/SMF 380' could also determine that the DN allows/supports simultaneous PDN connection and PDU session for the same UE 300 across multiple accesses (4G and 5G) with the same IP address. If an IP address assigned by EPC 330 is included in the PDU session request, and the PGW-C/SMF 380' determines that the UE 300 and/or DN and/or network are allowed or capable of simultaneous 4G and 5G radio and optionally the UE 300 requests that the PDU session be linked to the PDN connection over 4G (through an indicator in the PDU session request), the PGW-C/SMF 380' may then assign the same IP address to the PDU session (as assigned to the PDN connection over 4G). However, IMS signaling flows are restricted to the default NGBR bearer previously established over 4G and the new PDU session will be used for QoS flows associated to established IMS sessions. Traffic restrictions are enforced by filters whereby IMS signaling flows are mapped to the default NGBR bearer over 4G. Since the user plane is common across 4G and 5G, the PGW-C/SMF 380' manage the filters to the bearers on PGW-U of the PGW-U/UPF 370' and to QoS flows on UPF of PGW-U/UPF 370'.
b. If the PDU session and the PDN connection are for the same DN (IMS) and the UE 300 has not requested that the PDU session request be linked to the previous PDN connection over 4G and/or the PGW-C/SMF 380' determines the DN does not allow/support simultaneous PDN connection and PDU session for the same UE 300 across multiple accesses (4G and 5G) with different IP addresses, the PGW-C/SMF 380' may accept the PDU session request and releases the PDN connection or rejects the PDU session request with an appropriate reason code indicating multiple access to DN not allowed.
c. If a container is included in the PDU session request and contains an identity of the P-CSCF 390, the PGW-C/SMF 380' may be able to determine that the P-CSCF 390 in the container is in the list of allowable P-CSCFs of the IMS DN. If the identifier of the P-CSCF 390 is found in the list, then when the PGW-C/SMF 380' sends a PDU session response to the UE 300 at step 3040a', it will only include the identity of the P-CSCF 390 as requested by the UE 300. If the UE indicated that the PDU session should be linked to the PDN connection for the same DN, the SMF 380 would indicate that the PDU session was successfully linked. When the UE 300 receives an indication that the linking is done, the UE 300 would not send an IMS registration over 5G as the IMS signaling would continue to be carried out over the default NGBR. a) and b) are illustrated in Figure 3a step 3070a which may occur prior to step 3050a.
d. Alternatively, the PGW-C/SMF 380' may seek assistance from the PCF 350 prior to responding to the PDU session request as illustrated in step 3050a of Figure 3a. The PGW-C/SMF 380' may send the container or the content of the container, the DNN, the UE identity used in 5G, the type of access used by the UE 300 (i.e., 5G), the type of core network accessed by the UE 300 (i.e., 5GCN) and may include an indication of linking the new session to the PDN connection established over 4G. The policy entity 350 is the same policy entity used by the EPC 330. The PGW-C/SMF 380' is either configured to use the same policy entity 350 based on the DNN (as the APN and DNN indicate IMS) or the policy entity 350 serving the wireless device 300 is obtained from the subscriber database (not shown). The Policy entity 350 (step 3080a of Figure 3a, which may occur any time before or after step 3060a) retrieves the identity of the P-CSCF 390 from the container and determines that there is an existing Rx/Nx session with that P-CSCF 390. The policy entity 350 may also determine based on the received UE identity or the received P-CSCF identifier in the container that the UE identity used in 5G (Received identity) maps to the UE identity used in 4G and correspond to the same UE 300 and that an Rx/N5 session with the P-CSCF 390 exists. The policy entity 350 can then notify the P-CSCF 390 (step 3060a of Figure 3a) that the user has added 5G and is simultaneously connected to 5G IP-CAN and 5G RAT. If available, the policy entity 350 provides to the P-CSCF 390, the IMS public identity used by the UE 300 in the previous IMS registration and an indication for linking the session from 4G with the connection over 5G. The P-CSCF 390 may use the IMS public identity to determine (step 3090a of Figure 3a) that there is indeed an ongoing IMS registration for the UE300. If the P-CSCF 390 determines that the UE 200 must perform an IMS registration over 5G, the P-CSCF 390 may instruct the policy entity 350 to release the previous PDN connection over the previous IP-CAN or RAT. The P-CSCF 390 indicates that it will purge all IMS related data for the UE 300 and may include a purge timer during which the P-CSCF 390 is expecting an IMS registration from the UE 300. The P-CSCF 390 maintains all IMS context for the UE 300 until the purge timer expires after which all IMS context for the UE 300 will be cleared if a new IMS registration from the UE 300 is not received. Alternatively, if the P-CSCF 390 maintains the IMS registration over 4G, it may allow the UE 300 to access IMS service simultaneously over 5G without necessarily performing an IMS registration over 5G, then the P-CSCF 390 informs the policy entity 350 (step 3060a' of Figure 3a) that the UE 300 should use the P-CSCF 390 without performing another IMS registration over 5G. The policy entity 350 sends to the PGW-C/SMF 380' (step 3050a' of Figure 3a) information comprising the P-CSCF 390 to be used by the UE 300 and may also include a purge timer associated with the P-CSCF 390 if the P-CSCF 390 is expecting the UE 300 to perform an IMS registration over 5G. Alternatively, the policy entity 350 sends to the PGW-C/SMF 380' (step 3050a' of Figure 3a) information comprising the P-CSCF 390 to be used by the UE 300 and may also include an indication that the UE 300 is already registered with IMS over 4G. The PGW-C/SMF 380' sends a PDU session response to the UE 300 (step 3040a' of Figure 3a) providing it an assigned IP address or IPv6 prefix, and may include a container comprising the identifier of the P-CSCF 390 confirming the identity of the P-CSCF provided by the UE in the PDU session request, an associated purge timer for the IMS registration if provided by the P-CSCF 390 or an indication that no IMS registration is required also if provided by the P-CSCF 390 indicating that the linking is appropriate and established. A separate indicator for linking of PDN connection and PDU session can be provided to the UE 300 in the PDU session response.

If the UE 300 received a new IP address and received the identity of a P-CSCF 390 that is the same P-CSCF 390 indicated in the PDU session request illustrated at step 3040a of Figure 3a, or simply the same P-CSCF with which the UE 300 has previously registered when on 4G (step 3030a of Figure 3a) and if a purge timer is included, the UE 300 performs an IMS registration (step 3030a' of Figure 3a) with the P-CSCF 390 prior to the expiration of the purge timer or immediately after receiving the new IP address. If an indication that an IMS registration is not required for the P-CSCF 390 or the linking of PDN connection to PDU session is established, the UE 300 determines that its existing IMS registration over 4G should be used. All IMS signaling will be sent over 4G over the default NGBR, and 5G could be used for transporting media corresponding to IMS sessions, such as conversational video or board sharing.

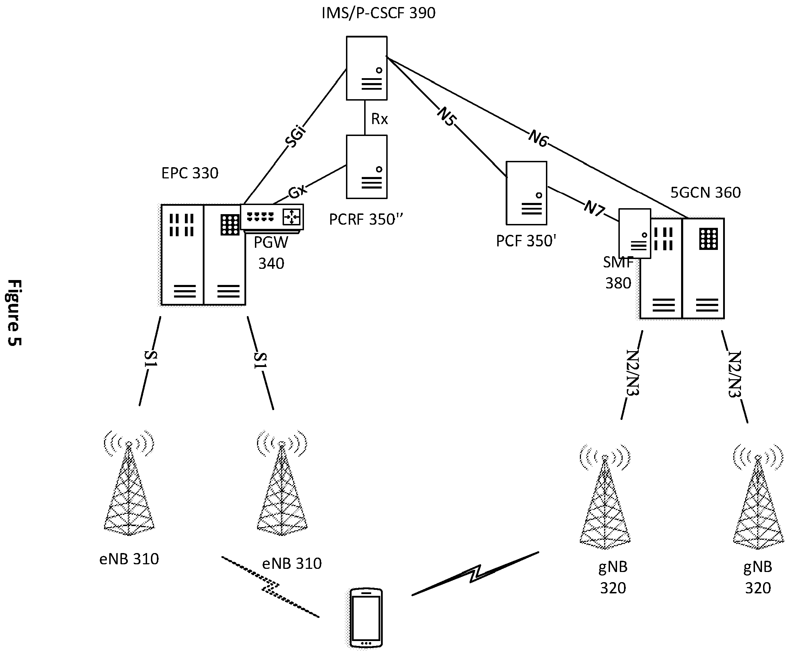

Figure 5 illustrates a telecommunication system comprising independent EPC 330 and a 5GCN 360 that do not share a common user plane and a common policy entity 350. The UE 300 establishes a PDN connection over 4G to a DN (exemplified here as IMS), then the UE 300 attempts to establish a PDU session over 5G to the same DN. The P-CSCF 390 in the IMS interfaces to the policy entity in 5G (PCF 350') over an N5 interface and to a PCRF 350" over Rx interface and communicates with the UE 300 over the IMS Gm interface. Figure 5 is described in conjunction with flow diagram in Figure 3a.

In this scenario, the UE 300 is first connected to the first core network. Let's assume the UE is first connected to an EPC 330 over an LTE eNB 310. The UE 300 established a PDN connection with the PGW 340 to a well-known IMS APN. A default NGBR bearer is established between the UE 300, the PGW 340 and the eNB 310. The UE 300 is assigned an IPv4 and/or IPv6 IP address and receives a P-CSCF address or identifier as part of the PDN connection establishment. The address or identifier of the P-CSCF 390 is received at the UE 300 in a Protocol Configuration Options, PCO, information element as specified in 3GPP TS 29.274 and 3GPP TS 24.301. The PDN connection is also illustrated in step 3000a of Figure 3a. The EPC 330 interacts with the policy entity 350" to receive policy data. This corresponds to step 3010a of Figure 3a. The UE 300 then performs an IMS registration with the P-CSCF 390 using the assigned IPv4 or IPv6 address over the NGBR bearer as illustrated in step 3030a of Figure 3a. The IMS registration comprises information including the IMS public identity of the user of the wireless device. At IMS registration, the P-CSCF 390 establishes a new Diameter Rx session, step 3020a of Figure 3a with the intention to subscribe to one or more of the following events: the status of the IMS Signaling path, i.e., the status of the NGBR bearer over which the IMS signaling is transported, the IP-CAN change, i.e., the change of the core network type in the event of handover and the core networks are aware of the handover, the RAT type change also when a handover is identified and change of PLMN identifier.

When the UE 300 enters a 5G area, it registers with 5GCN and if wants to connect to IMS and add 5G access as an additional access to IMS, it sends a PDU session request to establish a PDU session with the 5GCN 360, step 3040a of Figure 3a. The PDU session request comprises the UE identity that is compatible with 5G technology and a DNN indicating the PDU session is for IMS. It also comprises the identity of the P-CSCF 390 with which the UE 300 has previously registered and may include the IMS public identity of the user of the wireless device used in the previous IMS registration. The identity of the P-CSCF 390 and optionally the IMS public identity of the user of the wireless device may be included in a container. The container may be processed by the SMF 380 and/or the policy entity 350'. The container may also include the IP address assigned by the EPC 330 and an indication to link the PDU session to IMS to the PDN connection established over 4G to IMS. When the SMF380 receives the PDU session request, it handles it as a new PDU session since 5GCN and EPC are separate networks. The SMF 380 sends a message to a PCF 350' which may be selected based on the DNN. The SMF 380 may be configured with a PCF350' per DNN or a DNS resolution could be used. The PCF 350' receives an authorization request from the SMF 380 where the authorization request includes the received container or the content of the container as described above, the DNN, the UE identity used in 5G, the type of access used by the UE 300 (i.e., 5G), the type of core network accessed by the UE 300 (i.e., 5GCN). The PCF 350' determines based on the received P-CSCF identifier in the container that the P-CSCF 390 should be notified. The PCF 350' establishes an N5 session with the P-CSCF 390 over which it notifies the P-CSCF 390 (step 3060a of Figure 3a) that the user is connected over 5G. The presence of the linking indicator indicates to the P-CSCF that the UE 300 is simultaneously connecting to 4G and 5G. Additionally, the P-CSCF 390 may use the IMS public identity to determine (step 3090a of Figure 3a) that there is indeed an ongoing IMS registration for the UE300. If the P-CSCF 390 determines that the UE 300 must perform an IMS registration over 5G, the P-CSCF 390 may instruct the PCRF 350" to release all resources associated to the DN over 4G. The P-CSCF 390 indicates to the PCF 350' that it will purge all IMS related data for the UE 300 and may include a purge timer during which the P-CSCF 390 is expecting an IMS registration from the UE 300 over 5G. The P-CSCF 390 maintains all IMS context for the UE 300 until the purge timer expires after which all IMS context for the UE 300 will be cleared if a new IMS registration from the UE 300 is not received over 5G. Alternatively, if the P-CSCF 390 maintains the IMS registration over 4G, it may allow the UE 300 to access IMS service simultaneously over 5G without necessarily performing an IMS registration over 5G, then the P-CSCF 390 informs the PCF 350' (step 3060a' of Figure 3a) that the UE 300 should use the P-CSCF 390 without performing another IMS registration over 5G. The policy entity 350 sends to the SMF 380 (step 3050a' of Figure 3a) information comprising the P-CSCF 390 to be used by the UE 300 and may also include a purge timer associated with the P-CSCF 390 if the P-CSCF 390 is expecting the UE 300 to perform an IMS registration over 5G. Alternatively, the PCF 350' sends to the SMF 380 (step 3050a' of Figure 3a) information comprising the P-CSCF 390 to be used by the UE 300 and may also include an indication that the UE 300 is already registered with IMS over 4G. The SMF 380 sends a PDU session response to the UE 300 (step 3040a' of Figure 3a) providing it an assigned IP address or IPv6 prefix, and may include a container comprising the identifier of the P-CSCF 390 confirming the identity of the P-CSCF provided by the UE in the PDU session request, an associated purge timer for the IMS registration if provided by the P-CSCF 390 or an indication that no IMS registration is required also if provided by the P-CSCF 390 indicating that the linking is appropriate and established. A separate indicator for linking of PDN connection and PDU session can be provided to the UE 300 in the PDU session response.

If the UE 300 received the identity of a P-CSCF 390 that is the same P-CSCF 390 indicated in the PDU session request illustrated at step 3040a of Figure 3a, or simply the same P-CSCF with which the UE 300 has previously registered when on 4G (step 3030a of Figure 3a) and if a purge timer is included, the UE 300 performs an IMS registration (step 3030a' of Figure 3a) with the P-CSCF 390 prior to the expiration of the purge timer or immediately after receiving the new IP address. If an indication that an IMS registration is not required for the P-CSCF 390 or the linking of PDN connection to PDU session is established, the UE 300 determines that its existing IMS registration over 4G should be used. All IMS signaling will be sent over 4G over the default NGBR, and use 5G for transporting media corresponding to IMS sessions, such as conversational video or board sharing.

The scenarios illustrated in Figures 3-5 are described for a UE 300 starting a PDN connection for an APN in 4G then establishing a PDU session for a DNN in 5G, where the APN and the DNN correspond to the same DN (e.g., IMS). It is however, understood that the embodiments described herein also apply to the scenarios where the UE 300 starts by establishing a PDU session to a DN in 5G then requesting establishment of a PDN connection to the same DN over 4G. Other access technologies can of course be used.

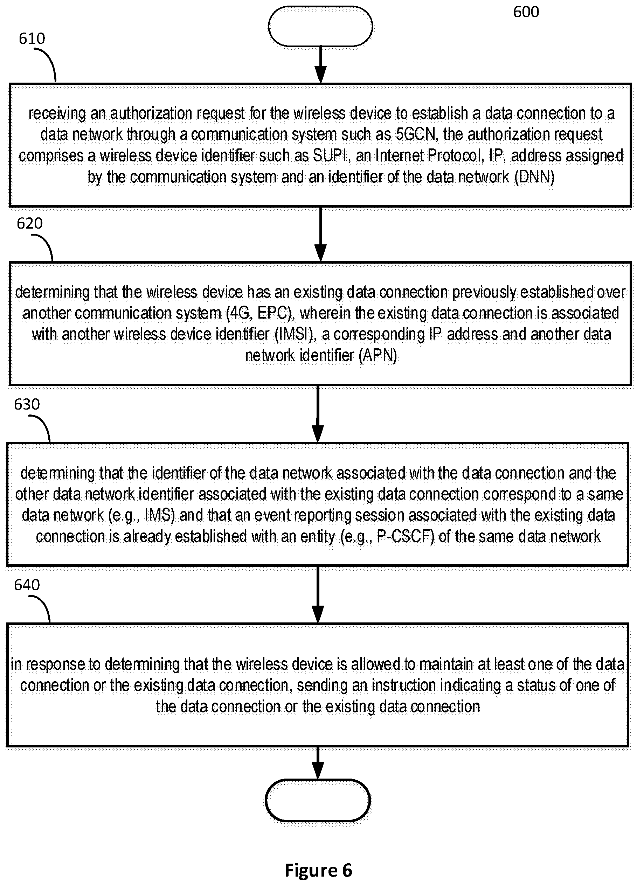

Figure 6 illustrates an exemplary method at a policy entity that may be executed in an environment where the policy entity is common across multiple core networks and access networks, i.e., a combined PCF (5G) and PCRF (4G). The policy entity at step 610 has already an existing policy context associated with the wireless device (as the wireless device is already connected to a core network (e.g., EPC) over the first access network (e.g., LTE EUTRAN)) when receiving an authorization request to authorize the wireless device to establish a PDU session to a data network through the 5G communication system that comprises a 5GCN and a 5G RAN. The authorization request comprises the UE identifier over 5G (e.g., SUPI), the IP address assigned by the 5G communication system (which may be the same IP address assigned on 4G or a new IP address). The authorization request includes the DNN which is an identifier of the data network in 5G and may include a container that comprises one or more of an identity of the entity in DN (e.g., an AF or a P-CSCF in IMS) with which the wireless device is registered over 4G, the DN public identifier (e.g., IMS public identifier) and an indication that the wireless device is requesting linking the DN session over the new access (5G) to the DN session established over 4G, or an indication of simultaneous access over 4G and 5G, in other words an indication requesting the policy entity and the AF to add 5G as a new access type/5G communication system to the 4G access type/4G communication system for the wireless device instead of modifying and replacing the previous access type/communication system (4G) with the new access type/communication system (5G). In addition, the authorization request may include the capability of the wireless device and of the network to support simultaneous access to different core networks and access networks of different technologies (4G and 5G). At step 620, the policy entity executes the step of determining that the wireless device has an existing packet data connection previously established over another communication system, EPC and 4G, wherein the existing packet data connection is associated with another wireless device identifier, as 4G access and 5G access support different wireless device identities (e.g., IMSI in 4G, SUPI in 5G). The policy entity would determine that the wireless device identity used in 5G (received identity) maps to the wireless device identity used in 4G and that both correspond to the same. With the wireless device identity, it would be able to retrieve the IP address and the data network identifier (APN) associated with the existing packet data connection. At step 630, the policy entity executes the step of determining that the DNN and the APN identify the same DN, such as IMS, and that the policy entity has an existing session with the AF in the data network. The session corresponds to an event reporting session established between the policy entity and the entity in the DN (e.g., P-CSCF) over the Rx/N5 interface to notify the AF (e.g., P-CSCF) when certain events associated with the wireless device connection to the AF occur. It is also used by the DN to signal DN session information.

At step 640, the policy entity determines if the wireless device is allowed to maintain both the PDN connection over 4G and the PDU session over 5G, or keep one or the other of the PDN connection over 4G and the PDU session over 5G. It may perform the determination of step 640 based on configured policy or retrieved policy from the policy database and the received information in the authorization request (e.g., UE capability) or it may get assistance from the AF (e.g., P-CSCF) in the DN (e.g., IMS).
- To perform the determination of step 640 based on configured or retrieved policy and the received information in the authorization request; the policy entity determines if the UE capability for simultaneous access is compatible with the network capability and policy and/or the subscriber profile or determines that a DN identified by a corresponding APN over 4G and DNN over 5G can be accessed by a wireless device via multiple access types simultaneously or only via a single access type at a time, and/or whether the DN is configured to handle a same/common IP address across multiple simultaneous connections over multiple core networks and access networks.
- To perform the determination of step 640 based on the assistance from the AF; the policy entity retrieves the identity of the AF (P-CSCF for IMS) from the container and notifies the AF over the existing Rx/Nx session that the wireless device is now adding a 5G connection and can simultaneously connect to 5G IP-CAN/5G RAT and 4G IP-CAN/4G RAT. If available, the policy entity provides to the AF (P-CSCF), the AF (IMS) public identity used by the wireless device in the previous IMS registration and may include the assigned IP address for the PDU session. The policy entity receives as a response from the AF (P-CSCF) that may indicate that simultaneous access is acceptable and that the wireless device should use the AF when connecting to the DN over the new access 5G without performing another DN (IMS) registration over 5G. Alternatively, if only a single access is allowed, the response may indicate that only 5G access should be kept and that the previous PDN connection should be released. It may include a purge timer associated with the AF if the AF is expecting the wireless device to perform a new DN (IMS) registration over 5G.

Still at step 640, the policy entity sends in response to the authorization request of step 610 information indicating the authorization result comprising the AF (P-CSCF) to be used by the wireless device and may also include an indication that simultaneous access is accepted and the wireless device can maintain the previous DN (IMS) registration and no DN registration over 5G is required. It may also include the purge timer if one is provided when simultaneous access is not allowed.

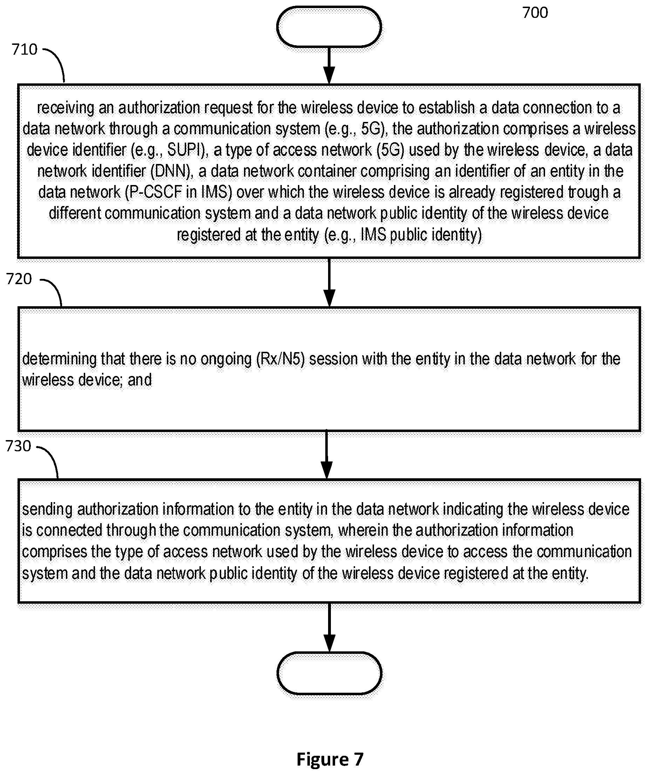

Figure 7 illustrates another exemplary method at a policy entity that may be performed in an environment where the core networks accessed by the wireless device do not share the policy entity, i.e., 5GCN uses a PCF and EPC uses a PCRF. The PCF and the PCRF do not necessarily communicate with each other.

Similar to the embodiment in Figure 6, the wireless device first establishes a PDN connection to a DN, over for example 4G EPC where the PCRF is used to provide policy authorization. In this example, IMS is used as an example of a DN. The wireless device performs an IMS registration with the P-CSCF in the IMS over the established PDN connection in EPC and LTE (4G). Once IMS registration is performed, the P-CSCF establishes an Rx session with the PCRF to install event reporting triggers and communicating IMS session information.

At step 710, the policy entity of a different core network, for example a PCF in 5GCN receives an authorization request to authorize the wireless device to establish a PDU session to the DN through the 5G communication system that comprises a 5GCN and a 5G RAN. The authorization request comprises the UE identifier over 5G (e.g., SUPI), the IP address assigned by the 5G communication system (which may be the same IP address assigned on 4G or a new IP address). The authorization request includes the DNN (which is an identifier of the data network in 5G indicating IMS in this example) and includes a container that comprises an identity of the entity in DN (e.g., an AF or a P-CSCF in IMS) with which the wireless device is registered over 4G, the DN public identifier (e.g., IMS public identifier) of the wireless device registered with the DN (IMS), such as the IMS public identity and an indication that the wireless device is requesting linking of the DN session in 5G with the DN session in 4G. The content of the container is provided by the wireless device. If the wireless device transmitted a capability to support simultaneous access to 4G and 5G, the authorization request includes that capability. Since the policy entity of 5GCN (PCF) is separate from the policy entity used in 4G (PCRF), the PCF has no access to the wireless device context over 4G and has no established N5 session with the AF (P-CSCF) in the DN. At step 720, the PCF retrieves the identity of the AF (P-CSCF for IMS) from the container, determines it has no ongoing N5 session with the AF or with any other AF in the DN. The PCF treats the authorization request as a new request for the wireless device. At step 730, the policy entity then proceeds with contacting the AF (P-CSCF) provided in the container (e.g., establishing a new N5 session) and notifies the AF (P-CSCF) that the wireless device is connected to 5G and the AF (IMS) or DN public identity used by the wireless device in the previous IMS registration over 4G. If available, the policy entity provides the indication by the wireless device of linking the DN session over the new access (5G) to the DN session established over 4G, or an indication of simultaneous access over 4G and 5G, in other words the policy entity requesting the AF to add 5G as a new access type or 5G communication system to the 4G access type or 4G communication system for the wireless device instead of modifying and replacing the previous access type/communication system (4G) with the new access type/communication system (5G). The policy entity (PCF) receives a response from the AF (P-CSCF) that may indicate:
- that simultaneous access is acceptable and that the wireless device is connected to the DN over the new access (5G) without performing another DN (IMS) registration over 5G, or
- that only a single access is allowed, 4G or 5G, if 5G is selected it may indicate that IMS services are to be provided over the new access (5G) and include a purge timer associated with the AF if the AF is expecting the wireless device to perform a new DN (IMS) registration over 5G.

The policy entity sends a response to the received authorization response indicating the response received from the AF, whether simultaneous access to the DN is allowed or not with specific instruction to the wireless device as described above.

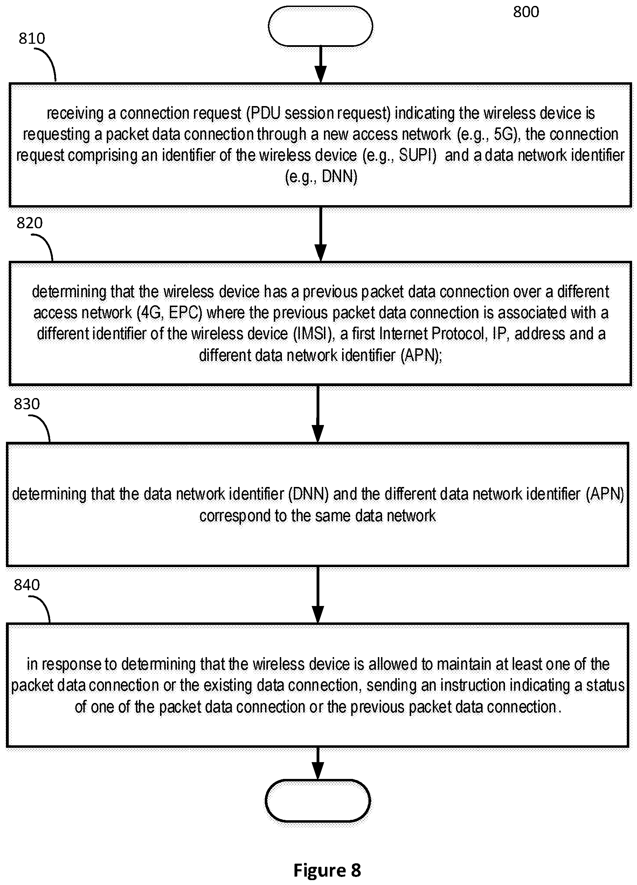

Figure 8 illustrates an exemplary method at a session management entity which is a user plane control entity (e.g., PGW-C/SMF) that may be executed in an environment where the user plane and the user plane control are common across multiple core networks (EPC and 5GCN) and access networks (LTE EUTRAN and 5G NR), i.e., a combined PGW-C/SMF and combined PGW-U/UPF. The embodiment is described using 4G and 5G access networks using EPC and 5GCN both sharing the user plane control and user plane entities and the wireless device has previously established a PDN connection over 4G LTE and EPC. Similar to previous embodiments in Figures 6 and 7, the wireless device first establishes a PDN connection to a DN, over 4G EPC where the user plane control entity (PGW-C/SMF) is used to select a PGW-U/UPF. The APN in the PDN connection request is used in the selection of the PGW-C/SMF and possibly in the selection of the PGW-U/UPF. In this example, IMS is used as an example of a DN. The wireless device performs an IMS registration with the P-CSCF in the IMS over the established PDN connection in EPC and LTE (4G) through the selected PGW-U/UPF. Once IMS registration is performed, the P-CSCF establishes an Rx session with the PCRF to install event reporting triggers and communicating IMS session information. The PCRF provisions the event triggers related to the IMS at the PGW-C/SMF.

At step 810, the method provides the step of receiving a connection request or a PDU session request indicating the wireless device is requesting a packet data session through a new access network, 5G. the PDU session request comprises an identifier of the wireless device in 5G, e.g., SUPI or other 5G identifier and a data network identifier, DNN. It may also include a DN container comprising the identity of the P-CSCF with which it has previously registered. At step 820, the common user plane control entity (PGW-C/SMF) determines that the identifier of the wireless device in 5G maps to a different identifier of the wireless device used over EPC/4G. The PGW-C/SMF may obtain the different identifier of the wireless device used over 4G from an external entity that maintains subscriber data. Using the different identifier of the wireless device used over 4G, the session management entity, or the PGW-C/SMF entity will be able to determine that the wireless device has a previous packet data connection over EPC/4G and the previous packet data connection has an associated first Internet Protocol, IP, address and a different data network identifier, as the PDN connection in EPC/4G uses an APN to identify the data network the wireless device wants to connect to, while 5GCN requires a DNN to identify the data network the wireless device should be connected to.

Step 830 describes the PGW-C/SMF determining that the data network identifier, i.e., DNN in 5G and the different data network identifier, i.e., APN in 4G correspond to the same data network which in this example is IMS and proceeds to determining at step 840 whether the wireless device is allowed to simultaneously access the DN (IMS) via the packet data connection over 4G and the packet data session over 5G, or whether one or the other of the PDN connection or the PDU session should be released as only a 4G or a 5G access to the DN is allowed. If the DN container includes an indication for linking or adding the 5G communication system/access to the previous 4G communication system/access for the DN for the wireless device, the PGW-C/SMF determines that the wireless device is able to handle simultaneous access over 4G and 5G and may also be able to handle the same IP address assigned to the PDN connection to IMS to be assigned to the PDU session as well. Once the determination is done, it sends a response to the PDU session request indicating the result of the request. The PGW-C/SMF may assign the same IP address as the previous PDN connection and either maintains both the PDN connection and the PDU session, or releases one of the PDN connection or the PDU session while reusing the IP address over the selected access. Alternatively, it may assign a new IP address to the PDU session and either release the PDN connection over 4G or maintain both PDU session and PDN connection.

In accordance with one embodiment, the PGW-C/SMF determines whether the wireless device is allowed simultaneous access to a DN over 4G and 5G is performed with the assistance from a policy control entity, where the PGW-C/SMF sends an authorization request to the policy control entity. The identity of the policy control entity may be obtained from the subscriber database where it is stored as part of the PDN connection session information over EPC/4G, or may be derived from resolving the DNN if the policy control entity is assigned per DN. The authorization request comprises information related to the packet data session over 5G and information related to the previous packet data connection over 4G. Information related to the previous packet data connection over 4G comprises the identifier of the wireless device used over 4G, the IP address associated with the previous PDN connection. Information related to the packet data session over 5G comprises the wireless device identifier over 5G (e.g., SUPI), the DNN, a DN container if provided by the wireless device and optionally an indication of UE capability of supporting simultaneous access to 4G and 5G. As a result, the PGW-C/SMF receives instruction for maintaining one of or both of the packet data connection over 4G or the packet data session over 5G. It may receive a DN container that will be sent transparently to the wireless device in a PDU session response.

### DN container

As previously described, a DN container used in a PDU session request or a request to establish a second connection to the DN from the wireless device over the second access network is used to transport
- the identifier of the AF(P-CSCF) in the DN (IMS) with which the wireless device has registered,
- Optionally, a DN public identifier of the wireless device registered at the DN. If the DN is IMS, that represents the IMS public identifier used in the IMS registration
- an optional indication for linking or adding the 5G communication system/access to the previous 4G communication system/access for the DN for the wireless device.

In the PDU session response, the DN container includes one or more of the following information depending on whether multiple simultaneous access over 4G and 5G is allowed for a specific DN (e.g., IMS) or whether a single access over 4G or 5G is allowed to the DN:
- AF (P-CSCF) identity with indication that the wireless device can connect to the DN over the new access (5G) without performing another DN (IMS) registration over 5G, i.e., simultaneous access is acceptable and, or
- IMS services can only be provided over a single access (4G or 5G), if new access (5G) include a purge timer associated with the AF if the AF is expecting the wireless device to perform a new DN (IMS) registration over 5G.

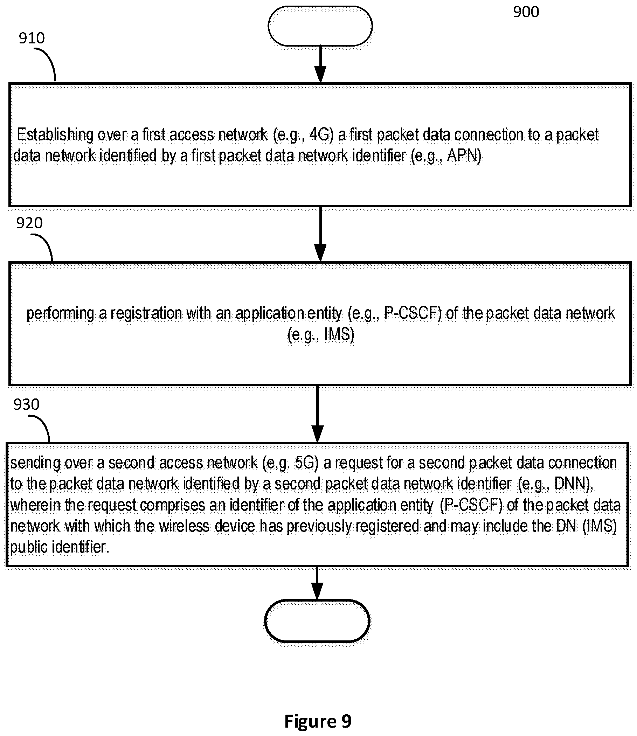

Figure 9 illustrates an exemplary method at a wireless device or UE in support of multiple access to 4G and 5G. The method is described using 4G/EPC as the first communication system selected by the wireless device to connect to a DN, IMS in this example, and then selects 5G/5GCN to establish a simultaneous PDU session to the same DN, i.e., IMS. The method comprises the step 910 of establishing over 4G/EPC a first packet data connection to IMS identified by a first packet data network identifier, i.e., APN. This is in accordance to the well-known procedure specified in 3GPP TS 23.401. At step 920, the wireless device performs an IMS registration with the AF which is the P-CSCF of the IMS. At step 930 the wireless device selects a 5G radio where it registers and sends a PDU session request to establish a PDU session to the same packet data network, however identified by a second packet data network identifier, i.e., a DNN, where the PDU session request comprises the identifier of the P-CSCF used for IMS registration over the first packet data connection. In one embodiment, If the UE is able to handle simultaneous connection over 4G and 5G with a common IP address or different IP address, the PDU session request sent over 5G/5GCN comprises an indication for linking the PDU session and the first packet data connection for the same DN and may also include the DN or IMS public identity of the wireless device. In one embodiment, the identifier of the P-CSCF, the indication for linking and the IMS public identity of the wireless device are included in a DN container of the PDU session request. In an embodiment, The PDU session request further comprises the IP address assigned to the wireless device over the first packet data connection.

In accordance with an embodiment, the wireless device may receive a response to the PDU session request where the response includes instruction to the wireless device to register with the P-CSCF (Same P-CSCF as the one provided in the PDU session request) and that the wireless device should register with the P-CSCF within a provided time interval. This instruction would be received if simultaneous access is not allowed and a new IP address is assigned for the wireless device. In another embodiment, if the same IP address as the PDN connection request is assigned to the PDU session with no further instruction, the PDN connection will be released by either the EPC/4G or by the wireless device. In another embodiment, the response to the PDU session request may indicate that the PDU session is allowed simultaneously with the first packet data connection without requiring an additional registration to the AF (P-CSCF) over the second access network. That indication may be accompanied with a new IP address assigned for the PDU session while maintaining the previous and different IP address for the PDN connection over 4G, alternatively, the same IP address as the IP address of the PDN connection over 4G may be assigned to the PDU session in which case the wireless device and the network share the same IP address across the PDN connection over 4G and the PDU session over 5G.

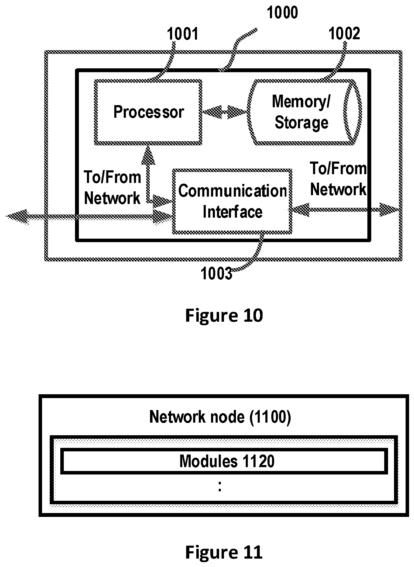

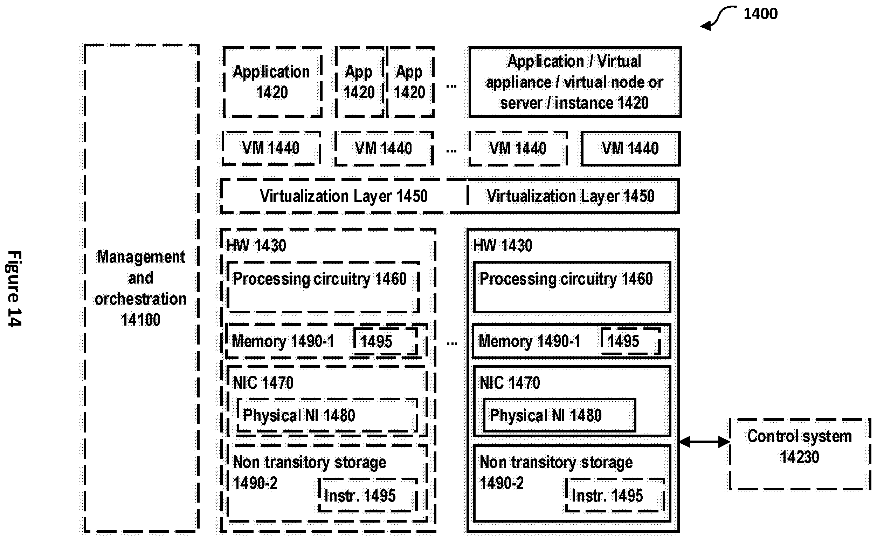

Figure 10 illustrates embodiments of a network entity where the network entity may implement an SMF 380, a UPF 370, an PGW-C/SMF 380', a PGW-U/UPF 370', a policy entity 350, a PCF 350', a PCRF 350", and/or a P-CSCF 390. The embodiment illustrated in of Figure 10 comprises a circuitry 1000 which executes the method steps according to the embodiments as described in Figures 3, 3a, 4, 5, 6, 7, 8, in addition to other embodiments not illustrated in the figures as described herein. In one embodiment, the circuitry 1000 may comprise a processor 1001 and a storage 1002 (also referred to as memory) containing instructions, which when executed, cause the processor 1001 to perform the steps in the associated methods and according to embodiments described herein. The circuitry 1000 may further comprise a communication interface 1003 to communicate with other network entities or functions in EPC and 5GCN. The embodiments described herein can also be executed in a virtualized embodiment. As used herein, a "virtualized" network entity is an implementation of any of the SMF 380, UPF 370, PGW-C/SMF 380', PGW-U/UPF 370', policy entity 350, PCF 350', PCRF 350", and/or P-CSCF 390 in which at least a portion of the functionality of the SMF 380, UPF 370, PGW-C/SMF 380', PGW-U/UPF 370', policy entity 350, PCF 350', PCRF 350" and/or P-CSCF 390 is implemented as virtual component(s) (e.g., via a virtual machine(s) executing on a physical processing node(s) in a network(s)). Figure 14 illustrates an example of a virtualized network entity.

In an embodiment illustrated in Figure 11 for a network node implementing an SMF 380, a UPF 370, an PGW-C/SMF 380', a PGW-U/UPF 370', a policy entity 350, a PCF 350', a PCRF 350", and/or a P-CSCF 390, the one or more processors may comprise one or more modules 1120 implemented in software. The module(s) provide functionality of the SMF 380, UPF 370, PGW-C/SMF 380', PGW-U/UPF 370', policy entity 350, PCF 350', PCRF 350", and/or P-CSCF 390 in accordance with the embodiments described herein, and in accordance with embodiments illustrated in Figures 3, 3a, 4-8.

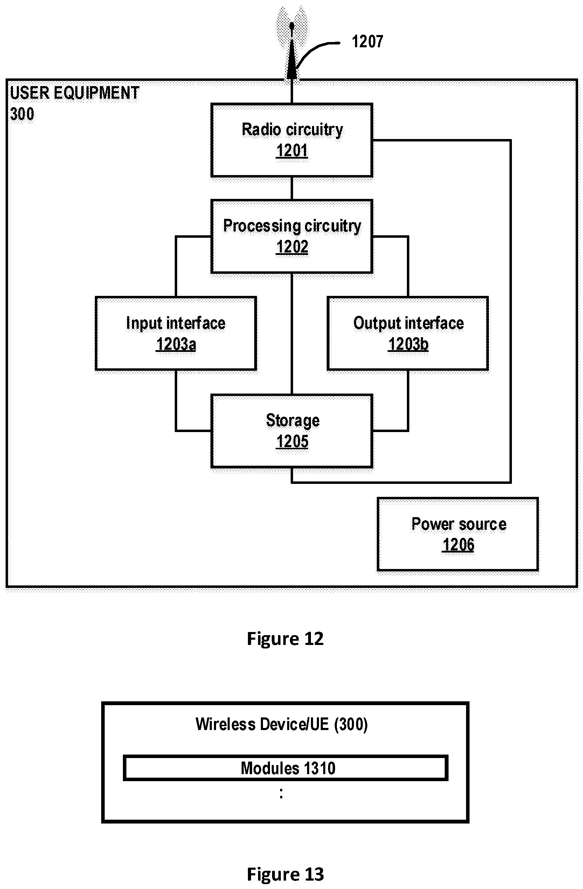

Figure 12 is a block diagram of an exemplary wireless device (UE) 300, in accordance with certain embodiments. The wireless device 300 may be a user equipment UE. Wireless device 300 includes an antenna 1207, radio front-end circuitry 1201, processing circuitry 1202, and a computer-readable storage medium 1205. Antenna 1207 may include one or more antennas or antenna arrays, and is configured to send and/or receive wireless signals, and is connected to radio front-end circuitry 1201. In certain alternative embodiments, wireless device 300 may not include antenna 1207, and antenna 1207 may instead be separate from wireless device 300 and be connectable to wireless device 300 through an interface or port.

The radio front-end circuitry 1201 may comprise various filters and amplifiers, is connected to antenna 1207 and processing circuitry 1202, and is configured to condition signals communicated between antenna 1207 and processing circuitry 1202. In certain alternative embodiments, wireless device 300 may not include radio front-end circuitry 1201, and processing circuitry 1202 may instead be connected to antenna 1207 without radio front-end circuitry 1201.

Processing circuitry 1202 may include one or more of radio frequency (RF) transceiver circuitry, baseband processing circuitry, and application processing circuitry. In some embodiments, the RF transceiver circuitry, baseband processing circuitry, and application processing circuitry may be on separate chipsets. In alternative embodiments, part or all of the baseband processing circuitry and application processing circuitry may be combined into one chipset, and the RF transceiver circuitry may be on a separate chipset. In still alternative embodiments, part or all of the RF transceiver circuitry and baseband processing circuitry may be on the same chipset, and the application processing circuitry may be on a separate chipset. In yet other alternative embodiments, part or all of the RF transceiver circuitry, baseband processing circuitry, and application processing circuitry may be combined in the same chipset. Processing circuitry 1202 may include, for example, one or more central processing units (CPUs), one or more microprocessors, one or more application specific integrated circuits (ASICs), and/or one or more field programmable gate arrays (FPGAs).

In particular embodiments, some or all of the functionality described herein as being provided by a wireless device may be provided by the processing circuitry 1202 executing instructions stored on a computer-readable storage medium 1205. In alternative embodiments, some or all of the functionality may be provided by the processing circuitry 1202 without executing instructions stored on a computer-readable medium, such as in a hard-wired manner. In any of those particular embodiments, whether executing instructions stored on a computer-readable storage medium or not, the processing circuitry can be said to be configured to perform the described functionality.

Antenna 1207, radio front-end circuitry 1201, and/or processing circuitry 1202 may be configured to perform any receiving operations described herein as being performed by a wireless device. Any information, data and/or signals may be received from a network node and/or another wireless device.

The processing circuitry 1202 may be configured to perform any operations described herein as being performed by a wireless device. Operations performed by processing circuitry 1202 may include processing information obtained by the processing circuitry 1202 by, for example, converting the obtained information into other information, comparing the obtained information or converted information to information stored in the wireless device, and/or performing one or more operations based on the obtained information or converted information, and as a result of said processing making a determination.

Antenna 1207, radio front-end circuitry 1201, and/or processing circuitry 1202 may be configured to perform any transmitting operations described herein as being performed by a wireless device. Any information, data and/or signals may be transmitted to a network node and/or another wireless device.

Computer-readable storage medium 1205 is generally operable to store instructions, such as a computer program, software, an application including one or more of logic, rules, code, tables, etc. and/or other instructions capable of being executed by a processor. Examples of computer-readable storage medium 1205 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or any other volatile or nonvolatile, non-transitory computer-readable and/or computer-executable memory devices that store information, data, and/or instructions that may be used by processing circuitry 1202. In some embodiments, processing circuitry 1202 and computer-readable storage medium 1205 may be considered to be integrated.

Alternative embodiments of wireless device or UE 300 may include additional components beyond those shown in Figure 120 that may be responsible for providing certain aspects of the wireless device's functionality, including any of the functionality described herein and/or any functionality necessary to support the solution described above. As just one example, wireless device 300 may include input interfaces, devices and circuits, and output interfaces, devices and circuits. Input interfaces, devices, and circuits are configured to allow input of information into wireless device 300, and are connected to processing circuitry 1202 to allow processing circuitry 1202 to process the input information. For example, input interfaces, devices, and circuits may include a microphone, a proximity or other sensor, keys/buttons, a touch display, one or more cameras, a USB port, or other input elements. Output interfaces, devices, and circuits are configured to allow output of information from wireless device 300, and are connected to processing circuitry 1202 to allow processing circuitry 1202 to output information from wireless device 300. For example, output interfaces, devices, or circuits may include a speaker, a display, vibrating circuitry, a USB port, a headphone interface, or other output elements. Using one or more input and output interfaces, devices, and circuits, wireless device 300 may communicate with end users and/or the wireless network, and allow them to benefit from the functionality described herein.

As another example, wireless device or UE 300 may include power source 1206. Power source 1206 may comprise power management circuitry. Power source 1206 may receive power from a power supply, which may either be comprised in, or be external to, power source 1206. For example, wireless device 300 may comprise a power supply in the form of a battery or battery pack which is connected to, or integrated in, power source 1206. Other types of power sources, such as photovoltaic devices, may also be used. As a further example, wireless device 300 may be connectable to an external power supply (such as an electricity outlet) via an input circuitry or interface such as an electrical cable, whereby the external power supply supplies power to power source 1206. Power source 1206 may be connected to radio front-end circuitry 1201, processing circuitry 1202, and/or computer-readable storage medium 1205 and be configured to supply wireless device 300, including processing circuitry 1202, with power for performing the functionality described herein.

Interface 1203/1203a may be used in the wireless communication of signaling and/or data between the wireless device 300 and network node (eNB 310 or gNB 320 or MME or AMF in the EPC 330 and 5GCN 360). For example, interface 1203/1203a may perform any formatting, coding, or translating that may be needed to allow the wireless device 300 to send and receive data from network node over a wireless connection. Interface 1203/1203a may also include a radio transmitter and/or receiver that may be coupled to or a part of antenna 1207. The radio may receive digital data that is to be sent out to network node via a wireless connection. The radio may convert the digital data into a radio signal having the appropriate channel and bandwidth parameters. The radio signal may then be transmitted via antenna 1207 to one or more of the network nodes above.

Wireless device 300 may also include multiple sets of processing circuitry 1202, computer-readable storage medium 1205, radio circuitry 1201, and/or antenna 1207 for different wireless technologies integrated into wireless device 300, such as, for example, LTE, NR, WiFi, or Bluetooth wireless technologies. These wireless technologies may be integrated into the same or different chipsets and other components within wireless device 300.

Any appropriate steps, methods, or functions described herein may also be performed through one or more functional modules. Each module can contain sub modules as would be apparent to a person skilled in the art. For example, a transceiving module may comprise a sending module and a receiving module.

In an embodiment illustrated in Figure 13 for the UE 300, the one or more processors may comprise one or more modules 1310 implemented in software. The module(s) provide functionality of the UE 300 in accordance with the embodiments described herein, and in accordance with the steps executed at the UE 300 in Figure 3, 3a, 4, 5, 6 and the method 900 of Figure 9.

Figure 14 is a schematic block diagram illustrating a virtualization environment 1400 in which functions such as implemented by some embodiment(s) may be virtualized. As used herein, virtualization can be applied to a node such as SMF 380, a UPF 370, an PGW-C/SMF 380', a PGW-U/UPF 370', a policy entity 350, a PCF 350', a PCRF 350", and/or a P-CSCF 390 as described herein and relates to an implementation in which at least a portion of the functionality is implemented as a virtual component(s) (e.g., via application(s)/component(s)/function(s) or virtual machine(s) executing on a physical processing node(s) in a network(s)).

In some embodiments, some or all of the functions described herein may be implemented as virtual components executed by one or more virtual machines implemented in a virtual environment(s) hosted by the hardware node(s) 1430. Further, in embodiments in which the virtual node is not a radio access node or does not require radio connectivity (e.g., a core network node), then the network node may be entirely virtualized.

The functions may be implemented by an application 1420 (which may alternatively be called a software instance, a virtual appliance, a network function, a virtual node, or a virtual network function) operative to implement steps of some method(s) according to some embodiment(s). The application 1420 runs in a virtualization environment 1400 which provides hardware 1430 comprising processing circuitry 1460 and memory 1490. The memory contains instructions 1495 executable by the processing circuitry 1460 whereby the application 1420 is operative to execute the method(s) or steps of the method(s) previously described in relation with some embodiment(s).

The virtualization environment 1400, comprises a general-purpose or special-purpose network hardware device(s) 1430 comprising a set of one or more processor(s) or processing circuitry 1460, which may be commercial off-the-shelf (COTS) processors, dedicated Application Specific Integrated Circuits (ASICs), or any other type of processing circuitry including digital or analog hardware components or special purpose processors. The hardware device(s) comprises a memory 1490-1 which may be a transitory memory for storing instructions 1495 or software executed by the processing circuitry 1460. The hardware device(s) comprise network interface controller(s) 1470 (NICs), also known as network interface cards, which include physical Network Interface 1480. The hardware device(s) also includes non-transitory machine readable storage media 1490-2 having stored therein software 1495 and/or instruction executable by the processing circuitry 1460. Software 1495 may include any type of software including software for instantiating the virtualization layer or hypervisor, software to execute virtual machines 1440 as well as software allowing to execute functions described in relation with some embodiment(s) described previously.

Virtual machines 1440, implement virtual processing, virtual memory, virtual networking or interface and virtual storage, and may be run by the virtualization layer or hypervisor 1450. Different embodiments of the instance or virtual appliance 1420 may be implemented on one or more of the virtual machine(s) 1440, and the implementations may be made in different ways.

During operation, the processing circuitry 1460 executes software 1495 to instantiate the hypervisor or virtualization layer, which may sometimes be referred to as a virtual machine monitor (V120). The hypervisor 1450 may present a virtual operating platform that appears like networking hardware to virtual machine 1440. As shown in the figure 14, hardware 1430 may be a standalone network node, with generic or specific hardware. Hardware 1430 may be part of a larger cluster of hardware (e.g. such as in a data center or customer premise equipment (CPE)) where many hardware nodes work together and are managed via management and orchestration (MANO) 14100, which, among others, oversees lifecycle management of applications 1420.

Virtualization of the hardware is in some contexts referred to as network function virtualization (NFV). NFV may be used to consolidate many network equipment types onto industry standard high volume server hardware, physical switches, and physical storage, which can be located in Data centers, and customer premise equipment.

In the context of NFV, a virtual machine 1440 is a software implementation of a physical machine that runs programs as if they were executing on a physical, non-virtualized machine. Each of the virtual machines 1440, and that part of the hardware 1430 that executes that virtual machine, be it hardware dedicated to that virtual machine and/or time slices of hardware temporally shared by that virtual machine with others of the virtual machine(s) 1440, forms a separate virtual network element(s) (VNE).

Still in the context of NFV, Virtual Network Function (VNF) is responsible for handling specific network functions that run in one or more virtual machines on top of the hardware networking infrastructure and corresponds to application 1420 in Figure 14.

In some embodiments, some signaling can be effected with the use of a control system 14230 which may alternatively be used for communication between the hardware node(s) 1430 and between the hardware units 1430 and external unit(s).

## Claims

1. A method (900) performed at a wireless device (300) for supporting multiple access networks, the method comprising:
- establishing (910) over a first access network a first packet data connection to a packet data network identified by a first packet data network identifier;
- performing (920) a registration with an application entity of the packet data network; and
- sending (930) over a second access network a request for a second packet data connection to the packet data network identified by a second packet data network identifier, wherein the request comprises i) an identifier of the application entity of the packet data network with which the wireless device has previously registered and ii) an indication for linking the second packet data connection to the first packet data connection.

2. The method of claim 1, further comprising receiving a response to the request for the second packet data network instructing the wireless device to register with the application entity within a provided time interval.

3. The method of claim 1, further comprising receiving a response to the request for the second packet data network indicating the second packet data connection is allowed simultaneously with the first packet data connection without requiring an additional registration to the application entity over the second access network.

4. The method of claim 1, wherein the request comprises an Internet Protocol, IP, address assigned over the first packet data connection.

5. The method of claim 1, wherein the request comprises a packet data network public identifier of the wireless device registered at the application entity of the packet data network over the first packet data connection.

6. The method of claim 5, wherein the packet data network public identifier of the wireless device is an Internet Protocol Multimedia System, IMS, public user identity.

7. A computer program comprising instructions which, when executed on at least one processor, cause the at least one processor to carry out the method according to any one of claims 1 to 6.

8. A carrier containing the computer program of claim 7, wherein the carrier is one of an electronic signal, an optical signal, a radio signal, or a computer readable storage medium.

9. A wireless device (300), comprising:
- at least one processor (1202); and
- memory (1205) comprising instructions executable by the at least one processor whereby the wireless device (300) is operable to:
- establish over a first access network a first packet data connection to a packet data network identified by a first packet data network identifier;
- perform a registration with an application entity of the packet data network; and
- send over a second access network a request for a second packet data connection to the packet data network identified by a second packet data network identifier, wherein the request comprises i) an identifier of the application entity of the packet data network with which the wireless device has previously registered and ii) an indication for linking the second packet data connection to the first packet data connection.

10. The wireless device (300) of claim 9, wherein the wireless device (300) is further adapted to operate according to the method of any one of claims 1 to 6.

## Patentansprüche

1. Verfahren (900), das an einer drahtlosen Vorrichtung (300) zum Unterstützen von mehreren Zugangsnetzen durchgeführt wird, das Verfahren umfassend:
- Einrichten (910) einer ersten Paketdatenverbindung mit einem Paketdatennetz, das durch eine erste Paketdatennetzkennung identifiziert wird, über ein erstes Zugangsnetz;
- Durchführen (920) einer Registrierung mit einer Verarbeitungsinstanz des Paketdatennetzes; und
- Senden (930) einer Anforderung für eine zweite Paketdatenverbindung an das Paketdatennetz, das durch eine zweite Paketdatennetzkennung identifiziert wird, über ein zweites Zugangsnetz, wobei die Anforderung i) eine Kennung der Verarbeitungsinstanz des Paketdatennetzes, mit der die drahtlose Vorrichtung zuvor registriert wurde, und ii) eine Angabe zum Linken der zweiten Paketdatenverbindung mit der ersten Paketdatenverbindung umfasst.

2. Verfahren nach Anspruch 1, ferner umfassend ein Empfangen einer Antwort auf die Anforderung für das zweite Paketdatennetz, das die drahtlose Vorrichtung anweist, sich mit der Verarbeitungsinstanz innerhalb eines bereitgestellten Zeitintervalls zu registrieren.

3. Verfahren nach Anspruch 1, ferner umfassend das Empfangen einer Antwort auf die Anforderung für das zweite Paketdatennetz, das angibt, dass die zweite Paketdatenverbindung gleichzeitig mit der ersten Paketdatenverbindung erlaubt ist, ohne eine zusätzliche Registrierung an der Verarbeitungsinstanz über das zweite Zugangsnetz zu erfordern.

4. Verfahren nach Anspruch 1, wobei die Anforderung eine Internetprotokoll-Adresse, IP-Adresse, umfasst, die über die erste Paketdatenverbindung zugewiesen ist.

5. Verfahren nach Anspruch 1, wobei die Anforderung eine öffentliche Paketdatennetzkennung der drahtlosen Vorrichtung umfasst, die an der Verarbeitungsinstanz des Paketdatennetzes über die erste Paketdatenverbindung registriert ist.

6. Verfahren nach Anspruch 5, wobei die öffentliche Paketdatenkennung der drahtlosen Vorrichtung eine öffentliche Internetprotokoll-Multimediasystembenutzeridentität, IMS-Benutzeridentität, ist.

7. Computerprogramm, umfassend Anweisungen, die bei Ausführen auf mindestens einem Prozessor bewirken, dass der mindestens eine Prozessor das Verfahren nach einem der Ansprüche 1 bis 6 ausführt.

8. Träger, der das Computerprogramm nach Anspruch 7 enthält, wobei der Träger eines ist von einem elektronischen Signal, einem optischen Signal, einem Funksignal oder einem computerlesbaren Speichermedium.

9. Drahtlose Vorrichtung (300), umfassend:
- mindestens einen Prozessor (1202); und
- Speicher (1205), umfassend Anweisungen, die durch den mindestens einen Prozessor ausführbar sind, wobei die drahtlose Vorrichtung (300) betriebsfähig ist, um:
- eine erste Paketdatenverbindung mit einem Paketdatennetz, das durch eine erste Paketdatennetzkennung identifiziert wird, über ein erstes Zugangsnetz einzurichten;
- eine Registrierung mit einer Verarbeitungsinstanz des Paketdatennetzes durchzuführen; und
- eine Anforderung für eine zweite Paketdatenverbindung an das Paketdatennetz, das durch eine zweite Paketdatennetzkennung identifiziert wird, über ein zweites Zugangsnetz zu senden, wobei die Anforderung i) eine Kennung der Verarbeitungsinstanz des Paketdatennetzes, mit der die drahtlose Vorrichtung zuvor registriert wurde, und ii) eine Angabe zum Linken der zweiten Paketdatenverbindung mit der ersten Paketdatenverbindung umfasst.

10. Drahtlose Vorrichtung (300) nach Anspruch 9, wobei die drahtlose Vorrichtung (300) ferner angepasst ist, um nach dem Verfahren nach einem der Ansprüche 1 bis 6 zu arbeiten.

## Revendications

1. Procédé (900) mis en œuvre au niveau d'un dispositif sans fil (300) pour prendre en charge de multiples réseaux d'accès, le procédé comprenant :
- l'établissement (910) sur un premier réseau d'accès d'une première connexion de données par paquets vers un réseau de données par paquets identifié par un premier identificateur de réseau de données par paquets ;
- la mise en œuvre (920) d'un enregistrement auprès d'une entité d'application du réseau de données par paquets ; et
- l'envoi (930) sur un deuxième réseau d'accès d'une demande pour une deuxième connexion de données par paquets au réseau de données par paquets identifié par un deuxième identificateur de réseau de données par paquets, dans lequel la demande comprend i) un identificateur de l'entité d'application du réseau de données par paquets auprès duquel le dispositif sans fil s'est précédemment enregistré et ii) une indication pour lier la deuxième connexion de données par paquets à la première connexion de données par paquets.

2. Procédé selon la revendication 1, comprenant en outre la réception d'une réponse à la demande pour le deuxième réseau de données par paquets donnant pour instruction au dispositif sans fil de s'enregistrer auprès de l'entité d'application au cours d'un intervalle de temps fourni.

3. Procédé selon la revendication 1, comprenant en outre la réception d'une réponse à la demande pour le deuxième réseau de données par paquets indiquant que la deuxième connexion de données par paquets est autorisée simultanément avec la première connexion de données par paquets sans exiger d'enregistrement supplémentaire à l'entité d'application sur le deuxième réseau d'accès.

4. Procédé selon la revendication 1, dans lequel la demande comprend une adresse de protocole Internet, IP, attribuée sur la première connexion de données par paquets.

5. Procédé selon la revendication 1, dans lequel la demande comprend un identificateur public de réseau de données par paquets du dispositif sans fil enregistré au niveau de l'entité d'application du réseau de données par paquets sur la première connexion de données par paquets.

6. Procédé selon la revendication 5, dans lequel l'identificateur public de réseau de données par paquets du dispositif sans fil est une identité publique d'utilisateur de système multimédia à protocole Internet, IMS.

7. Programme informatique, comprenant des instructions qui, lorsqu'elles sont exécutées sur au moins un processeur, amènent l'au moins un processeur à effectuer le procédé selon l'une quelconque des revendications 1 à 6.

8. Porteuse contenant le programme d'ordinateur selon la revendication 7, dans laquelle la porteuse est l'un parmi un signal électronique, un signal optique, un signal radio ou un support de stockage lisible par ordinateur.

9. Dispositif sans fil (300), comprenant :
- au moins un processeur (1202) ; et
- de la mémoire (1205) comprenant des instructions exécutables par l'au moins un processeur moyennant quoi le dispositif sans fil (300) est fonctionnel pour :
- établir sur un premier réseau d'accès une première connexion de données par paquets vers un réseau de données par paquets identifié par un premier identificateur de réseau de données par paquets ;
- mettre en œuvre un enregistrement auprès d'une entité d'application du réseau de données par paquets ; et
- envoyer sur un deuxième réseau d'accès une demande pour une deuxième connexion de données par paquets au réseau de données par paquets identifié par un deuxième identificateur de réseau de données par paquets, dans lequel la demande comprend i) un identificateur de l'entité d'application du réseau de données par paquets auprès duquel le dispositif sans fil s'est précédemment enregistré et ii) une indication pour lier la deuxième connexion de données par paquets à la première connexion de données par paquets.

10. Dispositif sans fil (300) selon la revendication 9, dans lequel le dispositif sans fil (300) est conçu en outre pour fonctionner selon le procédé de l'une quelconque des revendications 1 à 6.
